# EUROPEAN PATENT SPECIFICATION

(11) **EP 1 946 022 B1**
(45) Date of publication and mention of the grant of the patent: **10.01.2018**
(21) Application number: 06850095.8
(22) Date of filing: 03.11.2006
(51) Int. Cl.: F25B 49/02

(54) **SYSTEM AND METHOD FOR CAPACITY CONTROL IN A MULTIPLE COMPRESSOR LIQUID CHILLER SYSTEM**
SYSTEM UND VERFAHREN ZUR KAPAZITÄTSSTEUERUNG IN EINEM MEHRFACHKOMPRESSOR-FLÜSSIGKEITSKÜHLERSYSTEM
SYSTÈME ET PROCÉDÉ DE GESTION DE LA CAPACITÉ D'UN GROUPE DE COMPRESSEURS FRIGORIFIQUES REFROIDISSANT UN LIQUIDE

(30) Priority: 03.11.2005 US 733004 P
(43) Date of publication of application: 23.07.2008
(73) Proprietor: Johnson Controls Technology Company, Milwaukee, WI 53209 (US)
(72) Inventor: CRANE, Curtis C., York, Pennsylvania 17402 (US)
(74) Representative: Brosch, Oliver
(86) International application number: PCT/US2006/060505
(87) International publication number: WO 2007/102889

(56) References cited:
- EP-A- 1 398 576
- EP-A- 1 482 257
- WO-A-96/28700
- WO-A-2005/047700
- WO-A-2005/100884
- WO-A-2005/100885
- GB-A- 2 241 091
- GB-A- 2 257 243
- JP-A- 3 294 738
- JP-A- H02 136 641
- US-A- 5 632 156
- US-A- 5 797 729

## Description

### BACKGROUND OF THE INVENTION

The present invention relates generally to controlling the capacity of a liquid chiller system. More specifically, the present invention relates to controlling the capacity of a multiple compressor liquid chiller system during high ambient air temperature conditions.

Many liquid chiller or refrigeration applications use multiple compressors, i.e., two or more compressors, in one or more corresponding refrigerant circuits. One purpose for the use of multiple compressors is to obtain an increased capacity from the chiller system, which increased capacity could not be obtained by operating a single compressor. In addition, the use of multiple compressors can provide for improved reliability of the overall system by having one or more compressors remain operational to provide a reduced level of cooling capacity in the event that a compressor fails and can no longer provide cooling capacity.

The compressor motors of the chiller system can be powered directly from the AC power grid at the system location, which would result in the compressor being operated at only a single speed. Alternatively, the compressor motor(s) can use a variable speed drive inserted between the system power grid and the motor to provide the motor with power at a variable frequency and variable voltage, which then results in the compressor being capable of operation at several different speeds. Variable speed operation of the motors can be obtained by providing a corresponding variable speed drive for each compressor motor or by connecting all of the compressor motors in parallel to the inverter output of a variable speed drive. One drawback of using a separate variable speed drive for each compressor is that the overall chiller system becomes more expensive because multiple drives with a given cumulative power rating are more expensive than a single drive of the same output power rating. A drawback to connecting the compressor motors in parallel to the single inverter output of the variable speed drive is that a fault or failure of one of the motors may disable the variable speed drive and thus prevent the other motors connected to the variable speed drive from operating the remaining compressors on the chiller system. This disabling of the other motors connected to the variable speed drive defeats the function of the redundant compressors because all the compressors are disabled as a result of the disabling of the motors and the variable speed drive.

The corresponding control for the compressor motor powered by the AC power grid is relatively simple, involving mainly the starting and stopping of the motor. The corresponding control for the variable speed drive powered compressor motor is much more complicated and involves determining an appropriate speed for each compressor motor (and compressor) based on system conditions.

One type of control for multiple compressors involves the sequential engaging and disengaging of compressors to obtain a desired system load. This control process usually involves the starting of one compressor to meet an increasing system demand and subsequently adding additional compressors until the system demand is satisfied. The compressors are then shutdown or unloaded in a similar manner in response to a decreasing system demand. One example of this type of control is found in U.S. Patent No. 6,499,504 (the '504 Patent). The '504 Patent is directed to a compressor control system that operates in response to both the system pressure and the volumetric flow rate capacity of the system. Specifically, a compressor is loaded or unloaded from the compressor system after sensing the actual pressure and volumetric flow rate capacity of the compressor system.

Another type of control process for multiple compressors involves determining an operating configuration for a lead compressor based on system conditions and then controlling one or more lag compressors using additional control instructions to match the output of the lead compressor. One example of this type of control is found in U.S. Patent No. 5,343,384 (the '384 Patent). The '384 Patent is directed to a control system and method that operates a plurality of compressors at similar operating points. A microcontroller continually compares the system pressure with the desired pressure and causes corresponding adjustments, either up or down, in first, the position of the inlet valve of a lead compressor, and subsequently, in the position of the bypass valve of a lead compressor, so that these changes can be passed to the remaining compressors in the system by way of the CEM program.

WO 2005/100885 discloses a liquid chiller system according to the preamble of claims 1 and 9.

WO 96/28700 discloses a refrigerating apparatus having a control program with different compressor motor starting sequence depending on the ambient air temperature.

Therefore, what is needed is a system and method for controlling the capacity of a multiple compressor chiller system by controlling both the operating speed of the compressors and the number of compressors in operation to maintain a leaving chilled liquid temperature setpoint in the chiller system.

### SUMMARY OF THE INVENTION

One embodiment of the present invention is directed to a method for controlling the capacity of a multiple compressor chiller according to claim 1.

Another embodiment of the present invention is directed to a multiple compressor chiller system having a plurality of compressors according to claim 9.

One advantage of the present invention is that compressor cycling is reduced, while providing optimum control of the compressors.

Another advantage of the present invention is that system efficiency is improved by operating as many compressors as possible to satisfy a given load condition.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

Figure 1 illustrates a general application that can be used with the present invention.
Figure 2 illustrates schematically a variable speed drive that can be used with the present invention.
Figure 3 illustrates an embodiment of a refrigeration or chiller system used with the present invention.
Figure 4 is a flowchart showing a basic capacity control process which is not part of the present invention.
Figure 5 is a flowchart showing a compressor starting control process which is not part of the present invention.
Figure 6 is a flowchart showing a system loading control process which is not part of the present invention.
Figure 7 is a flowchart showing a system unloading control process which is not part of the present invention.
Figure 8 is a flowchart showing the basic high ambient temperature capacity control process of the present invention.
Figure 9 is a flowchart showing a compressor starting process of the high ambient temperature control process which is not part of the present invention.
Figure 10 is a flowchart showing an embodiment of a compressor starting process of the high ambient temperature control process of the present invention.
Figure 11 is a flowchart showing an embodiment of a system loading process of the high ambient temperature control process which is not part of the present invention.
Figure 12 is a flowchart showing an embodiment of a system loading process of the high ambient temperature control process of the present invention.
Figure 13 is a flowchart showing an embodiment of a system unloading process of the high ambient temperature control process of the present invention.

Wherever possible, the same reference numbers will be used throughout the drawings to refer to the same or like parts.

### DETAILED DESCRIPTION OF THE INVENTION

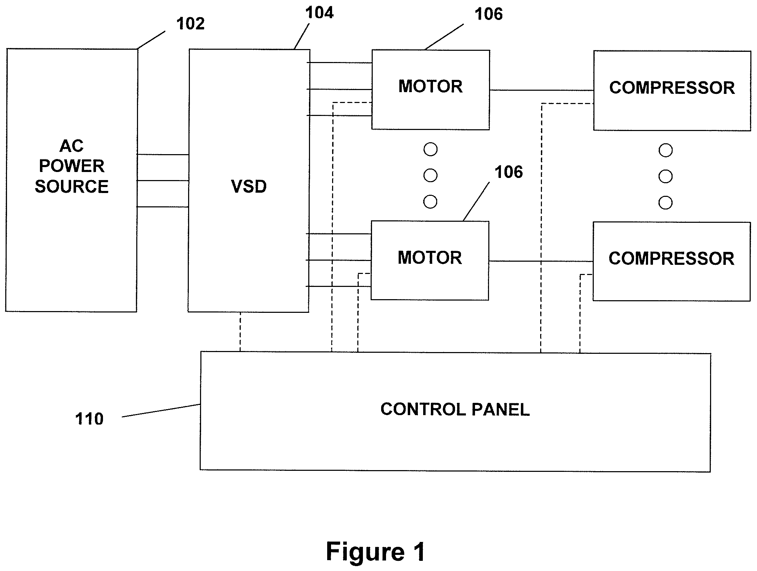

Figure 1 illustrates generally an application that can be used with the present invention. An AC power source 102 supplies a variable speed drive (VSD) 104, which powers a plurality of motors 106. The motors 106 are preferably used to drive corresponding compressors that can be used in a refrigeration or chiller system. A control panel 110 can be used to control operation of the VSD 104 and can monitor and/or control operation of the motors 106 and compressors.

The AC power source 102 provides single phase or multi-phase (e.g., three phase), fixed voltage, and fixed frequency AC power to the VSD 104 from an AC power grid or distribution system that is present at a site. The AC power source 102 preferably can supply an AC voltage or line voltage of 200 V, 230 V, 380 V, 460 V, or 600 V at a line frequency of 50 Hz or 60 Hz, to the VSD 104 depending on the corresponding AC power grid.

The VSD 104 receives AC power having a particular fixed line voltage and fixed line frequency from the AC power source 102 and provides AC power to each of the motors 106 at desired voltages and desired frequencies, both of which can be varied to satisfy particular requirements. Preferably, the VSD 104 can provide AC power to each of the motors 106 that may have higher voltages and frequencies and lower voltages and frequencies than the rated voltage and frequency of each motor 106. In another embodiment, the VSD 104 may again provide higher and lower frequencies but only the same or lower voltages than the rated voltage and frequency of each motor 106.

The motors 106 are preferably induction motors that are capable of being operated at variable speeds. The induction motors can have any suitable pole arrangement including two poles, four poles or six poles. However, any suitable motor that can be operated at variable speeds can be used with the present invention.

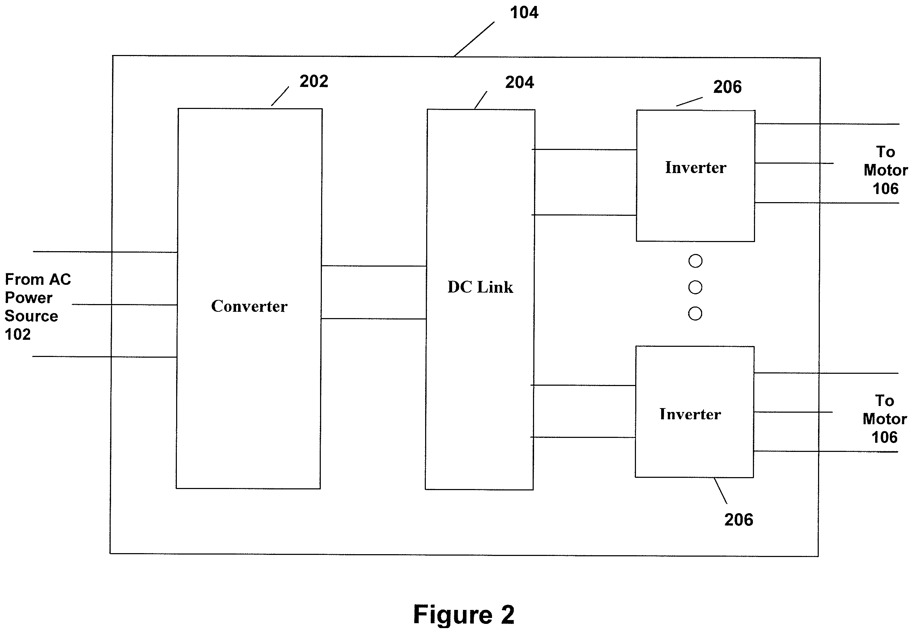

Figure 2 illustrates schematically some of the components in one embodiment of the VSD 104. The VSD 104 can have three stages: a converter or rectifier stage 202, a DC link stage 204 and an output stage having a plurality of inverters 206. The converter 202 converts the fixed line frequency, fixed line voltage AC power from the AC power source 102 into DC power. The converter 202 can be in a rectifier arrangement composed of electronic switches that can only be turned on either by gating, when using silicon controlled rectifiers, or by being forward biased, when using diodes. Alternatively, the converter 202 can be in a converter arrangement composed of electronic switches that can be gated both on and off, to generate a controlled DC voltage and to shape the input current signal to appear sinusoidal, if so desired. The converter arrangement of converter 202 has an additional level of flexibility over the rectifier arrangement, in that the AC power cannot only be rectified to DC power, but that the DC power level can also be controlled to a specific value. In one embodiment of the present invention, the diodes and silicon controlled rectifiers (SCRs) can provide the converter 202 with a large current surge capability and a low failure rate. In another embodiment, the converter 202 can utilize a diode or thyristor rectifier coupled to a boost DC/DC converter or a pulse width modulated boost rectifier to provide a boosted DC voltage to the DC link 204 in order to obtain an output voltage from the VSD 104 greater than the input voltage of the VSD 104.

The DC link 204 filters the DC power from the converter 202 and provides energy storage components. The DC link 204 can be composed of capacitors and inductors, which are passive devices that exhibit high reliability rates and very low failure rates. Finally, the inverters 206 are connected in parallel on the DC link 204 and each inverter 206 converts the DC power from the DC link 204 into a variable frequency, variable voltage AC power for a corresponding motor 106. The inverters 206 are power modules that can include power transistors or integrated bipolar power transistor (IGBT) power switches with diodes connected in parallel. Furthermore, it is to be understood that the VSD 104 can incorporate different components from those discussed above and shown in Figure 2 so long as the inverters 206 of the VSD 104 can provide the motors 106 with appropriate output voltages and frequencies.

For each motor 106 to be powered by the VSD 104, there is a corresponding inverter 206 in the output stage of the VSD 104. The number of motors 106 that can be powered by the VSD 104 is dependent upon the number of inverters 206 that are incorporated into the VSD 104. In a preferred embodiment, there can be either 2 or 3 inverters 206 incorporated in the VSD 104 that are connected in parallel to the DC link 204 and used for powering a corresponding motor 106. While it is preferred for the VSD 104 to have between 2 and 3 inverters 206, it is to be understood that more than 3 inverters 206 can be used so long as the DC link 204 can provide and maintain the appropriate DC voltage to each of the inverters 206.

In a preferred embodiment, the inverters 206 are jointly controlled by a control system, as discussed in greater detail below, such that each inverter 206 provides AC power at the same desired voltage and frequency to corresponding motors based on a common control signal or control instruction provided to the inverters 206. The control of the inverters 206 can be by the control panel 110 or other suitable control device that incorporates the control system.

The VSD 104 can prevent large inrush currents from reaching the motors 106 during the startup of the motors 106. In addition, the inverters 206 of the VSD 104 can provide the AC power source 102 with power having about a unity power factor. Finally, the ability of the VSD 104 to adjust both the input voltage and input frequency received by the motor 106 permits a system equipped with VSD 104 to be operated on a variety of foreign and domestic power grids without having to alter the motors 106 for different power sources.

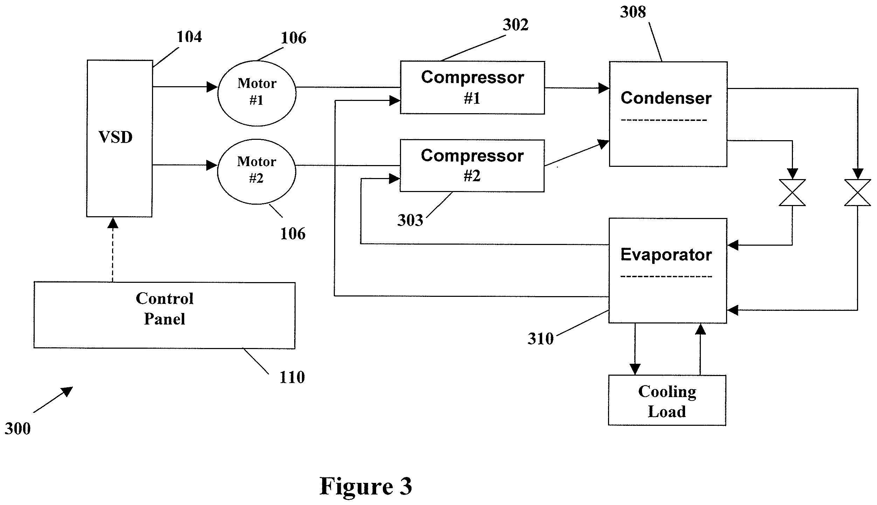

Figure 3 illustrates generally one embodiment of the present invention incorporated in a refrigeration system. As shown in Figure 3, the HVAC, refrigeration or liquid chiller system 300 has two compressors incorporated in corresponding refrigerant circuits, but it is to be understood that the system 300 can have one refrigerant circuit or more than two refrigerant circuits for providing the desired system load and can have more than a one compressor for a corresponding refrigerant circuit. The system 300 includes a first compressor 302, a second compressor 303, a condenser arrangement 308, expansion devices, a water chiller or evaporator arrangement 310 and the control panel 110. The control panel 110 can include an analog to digital (A/D) converter, a microprocessor, a non-volatile memory, and an interface board to control operation of the refrigeration system 300. The control panel 110 can also be used to control the operation of the VSD 104, the motors 106 and the compressors 302 and 303. A conventional HVAC, refrigeration or liquid chiller system 300 includes many other features that are not shown in Figure 3. These features have been purposely omitted to simplify the drawing for ease of illustration.

The compressors 302 and 303 compress a refrigerant vapor and deliver it to the condenser 308. The compressors 302 and 303 are preferably connected in separate refrigeration circuits, i.e., the refrigerant output by the compressors 302 and 303 are not mixed and travel in separate circuits through the system 300 before reentering the compressors 302 and 303 to begin another cycle. The separate refrigeration circuits preferably use a single condenser housing 308 and a single evaporator housing 310 for the corresponding heat exchanges. The condenser housing 308 and evaporator housing 310 maintain the separate refrigerant circuits either through a partition or other dividing means within the corresponding housing or with separate coil arrangements. In another embodiment of the present invention, the refrigerant output by the compressors 302 and 303 can be combined into a single refrigerant circuit to travel through the system 300 before being separated to reenter the compressors 302 and 303.

The compressors 302 and 303 are preferably screw compressors or centrifugal compressors, however the compressors can be any suitable type of compressor including reciprocating compressors, scroll compressors, rotary compressors or other type of compressor. The output capacity of the compressors 302 and 303 can be based on the operating speed of the compressors 302 and 303, which operating speed is dependent on the output speed of the motors 106 driven by the inverters 206 of the VSD 104. The refrigerant vapor delivered to the condenser 308 enters into a heat exchange relationship with a fluid, e.g., air or water, and undergoes a phase change to a refrigerant liquid as a result of the heat exchange relationship with the fluid. The condensed liquid refrigerant from condenser 308 flows through corresponding expansion devices to an evaporator 310.

The evaporator 310 can include connections for a supply line and a return line of a cooling load. A secondary liquid, which is preferably water, but can be any other suitable secondary liquid, e.g. ethylene glycol, calcium chloride brine or sodium chloride brine, travels into the evaporator 310 via return line and exits the evaporator 310 via supply line. The liquid refrigerant in the evaporator 310 enters into a heat exchange relationship with the secondary liquid to chill the temperature of the secondary liquid. The refrigerant liquid in the evaporator 310 undergoes a phase change to a refrigerant vapor as a result of the heat exchange relationship with the secondary liquid. The vapor refrigerant in the evaporator 310 then returns to the compressors 302 and 303 to complete the cycle. It is to be understood that any suitable configuration of condenser 308 and evaporator 310 can be used in the system 300, provided that the appropriate phase change of the refrigerant in the condenser 304 and evaporator 306 is obtained.

Preferably, the control panel, microprocessor or controller 110 can provide control signals to the VSD 104 to control the operation of the VSD 104, and particularly the operation of inverters 206, to provide the optimal operational setting for the VSD 104. The control panel 110 can increase or decrease the output voltage and/or frequency of the inverters 206 of the VSD 104, as discussed in detail below, in response to increasing or decreasing load conditions on the compressors 302 and 303 in order to obtain a desired operating speed of the motors 106 and a desired capacity of the compressors 302 and 303.

The control panel 110 executes a control algorithm(s) or software to control operation of the system 100 and to determine and implement an operating configuration for the inverters 206 of the VSD 104 to control the capacity of the compressors 102 and 104 in response to a particular output capacity requirement for the system 100. In one embodiment, the control algorithm(s) can be computer programs or software stored in the non-volatile memory of the control panel 110 and can include a series of instructions executable by the microprocessor of the control panel 110. While it is preferred that the control algorithm be embodied in a computer program(s) and executed by the microprocessor, it is to be understood that the control algorithm may be implemented and executed using digital and/or analog hardware by those skilled in the art. If hardware is used to execute the control algorithm, the corresponding configuration of the control panel 110 can be changed to incorporate the necessary components and to remove any components that may no longer be required.

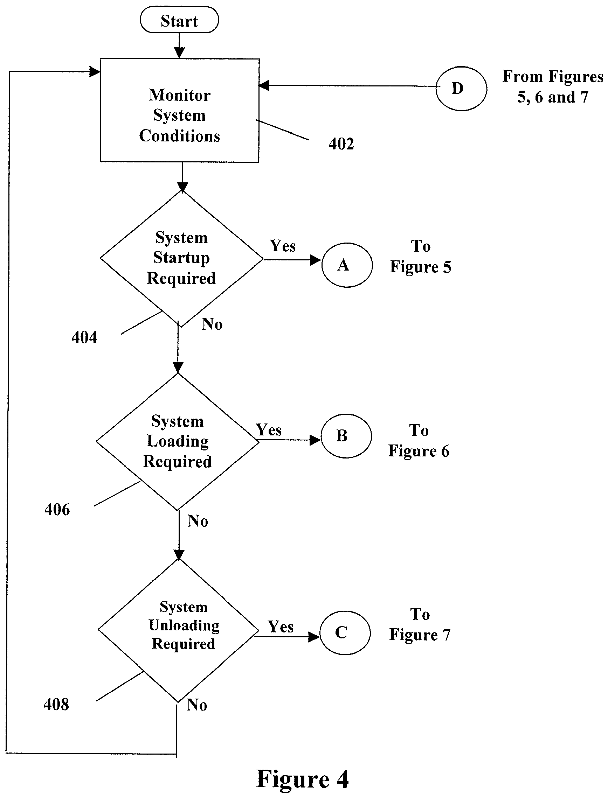

Figure 4 illustrates a basic capacity control process which is not part of the present invention. The process begins by monitoring the current operating conditions of the compressors and the corresponding chiller system at step 402. One or more sensors or other suitable monitoring devices are placed in the chiller system to monitor one or more operating conditions of the chiller system. The sensors provide signals to the control panel 110 corresponding to the measured system parameters. The measured system parameters of the chiller system can correspond to any suitable chiller system parameter that can be measured such as refrigerant temperature, refrigerant pressure, refrigerant flow, leaving chilled liquid temperature from the evaporator or any other suitable parameter.

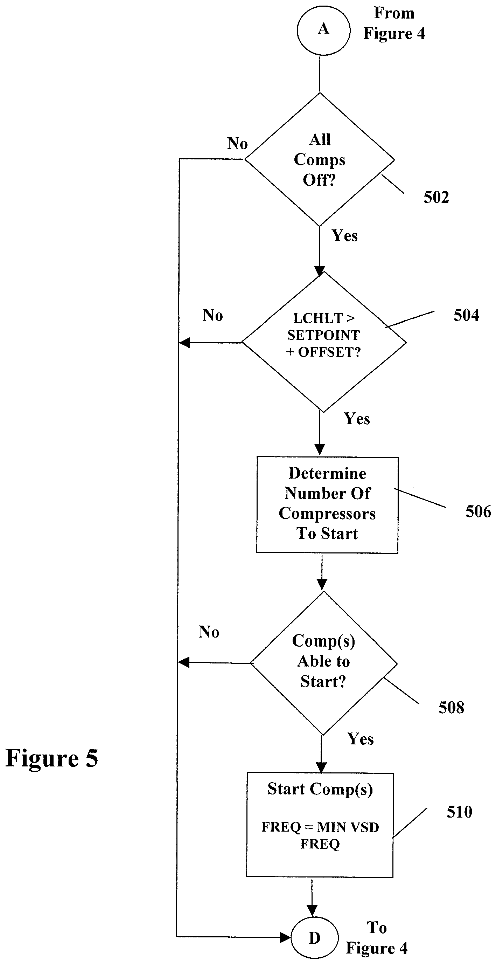

Based on the monitored system conditions obtained in step 402, the control process then determines if an initial system startup is required in step 404. An initial system startup involves the starting of one or more compressors to transition the system from an inactive or shut-down state to an active or operational state. If an initial system startup is determined to be necessary, the control passes to a startup control process shown in Figure 5 and described in greater detail below. If no initial system startup is necessary, usually because one or more compressors have been previously started, the control process moves to step 406 to determine if system loading or increased system capacity is required.

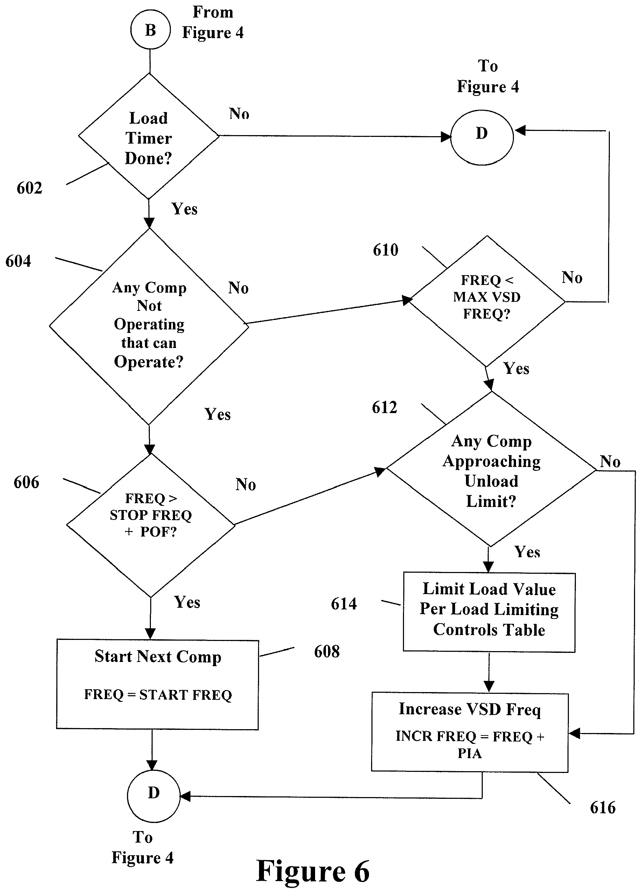

If the control process determines that system loading is required in response to a demand for additional system capacity based the monitored system conditions in step 402, the control process proceeds to a system loading process shown in Figure 6 and described in greater detail below to increase the load on the compressors in order to increase the system capacity. If system loading is not necessary, the control process moves to step 408 to determine if system unloading or decreased system capacity is required.

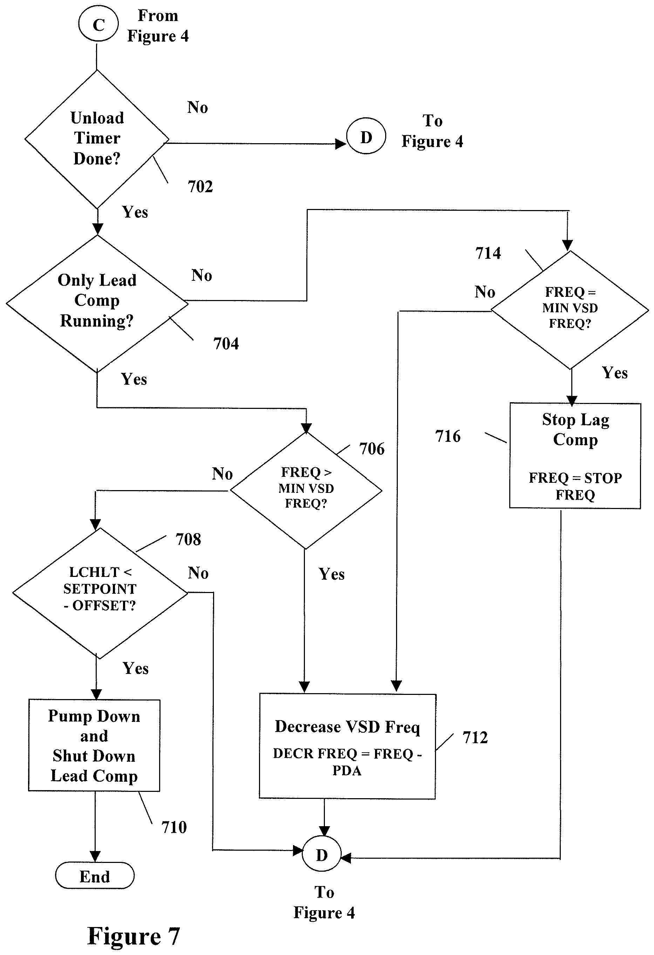

If the control process determines that system unloading is required in response to a decrease in the demand for system capacity based on the monitored system conditions in step 402, the control process proceeds to a system unloading process shown in Figure 7 and described in greater detail below to decrease the load on the compressors in order to decrease the system capacity. If system unloading is not necessary, the control process returns to step 402 and repeats the process.

The basic control process of Figure 4 preferably uses a fuzzy logic control technique, but can use any suitable control technique for determining when to start the compressors of the chiller system, when to increase the capacity of the chiller system and when to decrease the capacity of the chiller system. The control processes of Figures 5, 6 and 7 are preferably directed to the control process for the chiller system in response to one of the above-determinations being made by the basic control process of Figure 4.

Figure 5 illustrates a startup control process which is not part of the present invention. The startup control process involves the starting of one or more compressors to transition the system from an inactive or shut-down state to an active or operational state. The process begins in step 502 by determining if all of the compressors are off, inactive or shut-down. If one of the compressors is active or operational in step 502, the process returns to step 402 of Figure 4 to further monitor system conditions because the startup process is not required because one or more of the compressors is operational. Next, after determining that all the compressors are inactive or off in step 502, i.e., the compressors are not in operation, the startup control process determines if the leaving chilled liquid temperature (LCHLT) from the evaporator is greater than a setpoint temperature plus a predetermined offset or control range. The predetermined offset provides for a control region around the setpoint temperature, i.e., the desired LCHLT, to prevent frequent adjustments to the chiller system in response to very minor changes in system conditions.

The predetermined setpoint temperature and the predetermined offset can preferably be programmable or set by a user, but, it is to be understood that the predetermined setpoint temperature and the predetermined offset can also be preprogrammed into the system. The predetermined setpoint temperature can range between about -12.22 °C (10 °F) and about 15.55 °C (60 °F) depending on the particular liquid to be chilled in the evaporator. The predetermined setpoint temperature is preferably between about 4.44 °C (40 °F) and about 12.78 °C (55 °F) when water is to be chilled and is preferably between about -9.44 °C (15 °F) and about 12.78 °C (55 °F) when a glycol mixture is to be chilled. The predetermined offset can range between about ± 0.55 °C (1 °F) and about ± 2.78 °C (5 °F) and is preferably between about ± 0.83 °C (1.5 °F) and about ± 1.39 °C (2.5 °F).

If the LCHLT is greater than the setpoint temperature plus the predetermined offset in step 504, then the number of compressors to be started is determined in step 506. The number of compressors to start can be determined by any suitable technique and is usually determined in response to particular system features or parameters such as the LCHLT and the rate of change of the LCHLT. If the LCHLT is not greater than the setpoint temperature plus the predetermined offset in step 504, then the process returns to step 402 of Figure 4 to further monitor system conditions. After the number of compressors to start is determined, the compressors are tested in step 508 to determine if the compressors can be started or operated. In step 508, the control panel 110 can preferably determine if the compressors cannot be started or operated or are otherwise inoperable based on internal compressor controls or signals that prevent the starting of a compressor, (e.g., a "no run permissive" signal is present, the compressor has been faulted or the compressor is locked out), or based on other system controls or signals relating to problems or restrictions in the system, (e.g., the system switch has been turned off, the system has been faulted, the system has been locked out, or the system anti-recycle timer is active). If all the compressors cannot be started in step 508, the process returns to step 402 of Figure 4 to further monitor system conditions. Once it is determined that all the compressors to be started are capable of being started and operated, the compressors are started in step 510 and operated at a frequency corresponding to the minimum frequency output by the VSD. The minimum frequency output by the VSD for compressor operation can range from 15 Hz to 75 Hz and is preferably 40 Hz. It is to be understood that the VSD may be capable of providing a minimum frequency output that is less than the minimum frequency output required for compressor operation. After the compressors are started in step 510, the process returns to step 402 of Figure 4 to begin the process again and monitor system conditions.

Figure 6 illustrates a system loading control process which is not part of the present invention. The system loading control process involves either the activating or starting of one or more compressors in response to an increased load or demand on the system or the increasing of the output frequency from the VSD powering the compressors in order to increase the output capacity of the compressors in response to an increased load or demand on the system. The process begins in step 602 by determining if a load timer or counter has completed its count. In one embodiment, the load timer is preferably set for 2 seconds. However, any suitable time duration can be used for the load timer. If the load timer has not completed its count, the system does not load any of the compressors and returns to step 402 of Figure 4 to further monitor system conditions until the load timer is finished or system conditions change. The load timer is used to give the system adequate time to respond to a prior control instruction that started a new compressor or increased the output frequency of the VSD powering the compressors and their respective motors.

After the load timer has completed its count, the system loading control process then determines if there are any compressors that are not currently in operation that are capable of operation in step 604. If there are any compressors that are not currently in operation, then the output frequency of the VSD, i.e., the operating frequency of the compressors, is compared to a stop frequency plus a predetermined offset frequency in step 606. The stop frequency is preferably calculated as the VSD minimum frequency output, as discussed above, multiplied by the ratio of the number of operating compressors plus one divided by the number of operating compressors. The predetermined offset frequency can range from between about 0 Hz and about 50 Hz and is preferably between about 5 Hz and about 10 Hz. The comparison of the VSD output frequency to the stop frequency plus the offset frequency is used to determine if it would be appropriate to start another compressor. The addition of the offset frequency to the stop frequency is used to prevent the starting of a compressor by just satisfying the condition for starting a compressor, i.e., being at the stop frequency, and then having to shut off a compressor in response to a decreased load or demand on the system, i.e., a call to unload, because the compressors are operating at the minimum frequency. The addition of the offset to the stop frequency is used to have the compressors operating at a frequency above the minimum frequency, after an additional compressor is started, so there is room to unload the compressors by decreasing the output frequency of the VSD before a shutdown of a compressor is required.

After determining that the VSD output frequency is greater than the stop frequency plus the offset in step 606, another compressor is started and the VSD is controlled to power the operating compressors at a start frequency in step 608. The start frequency is preferably calculated as the VSD output frequency prior to starting the compressor multiplied by the ratio of the number of operating compressors (including the one to be started) minus one divided by the number of operating compressors (including the one to be started). Once the compressors are started and accelerated to the start frequency, the process returns to step 402 of Figure 4 to further monitor system conditions.

Referring back to step 604, if all the compressors are currently operating, it is determined in step 610 if the VSD output frequency powering the compressors is less than the maximum VSD output frequency. The VSD maximum output frequency can range between 120 Hz and 300 Hz and is preferably 200 Hz. However, it is to be understood that the VSD can have any suitable maximum output frequency. If the VSD output frequency is equal to the maximum VSD output frequency, then the process returns to step 402 of Figure 4 to further monitor system conditions because no additional capacity can be generated by the system. However, if the VSD output frequency is less than the maximum VSD output frequency, then the compressors and their corresponding refrigerant circuits are checked or evaluated to determine if they are approaching an unload limit in step 612. The unload limit is used to prevent damage to the compressors and corresponding refrigerant circuit by unloading the compressors when certain predetermined parameters or conditions are present.

If no compressors or corresponding refrigerant circuits are approaching an unload limit, then the VSD is controlled to power the compressors at an increased VSD output frequency equal to the current output frequency plus a predetermined increment amount in step 616. The predetermined increment amount can be between about 0.1 Hz and about 25 Hz and is preferably between about 0.1 Hz and about 1 Hz. The predetermined increment amount can preferably be calculated by a fuzzy logic controller or control technique, however, any suitable controller or control technique, e.g., a PID control, can be used. The increased VSD output frequency can be increased up to the maximum VSD output frequency. Once the compressors are accelerated to the increased VSD output frequency, the process returns to step 402 of Figure 4 to further monitor system conditions. Referring back to step 612, if it is determined that one or more compressors and corresponding refrigerant circuits are approaching an unload limit, then a limited load value based on information in a load limiting controls table is calculated for those compressors and corresponding refrigerant circuits in step 614. Next, in step 616, as described in detail above, the process adjusts the VSD output frequency for the compressors, subject to any load limits from step 614, and returns to step 402 of Figure 4 to further monitor system conditions.

Figure 7 illustrates a system unloading control process which is not part of the present invention. The system unloading control process involves the deactivating or shutting down of one or more compressors in response to a reduced load or demand for the system or the decreasing of the output frequency from the VSD powering the compressors in order to decrease the output capacity of the compressors in response to a decreased load or demand on the system. The process begins in step 702 by determining if an unload timer or counter has completed its count. In one embodiment, the unload timer is preferably set for 2 seconds. However, any suitable time duration can be used for the unload timer. If the unload timer has not completed its count, the system does not unload any of the compressors and returns to step 402 of Figure 4 to further monitor system conditions until the unload timer is finished or system conditions change.

The unload timer is used to give the system adequate time to respond to a prior control instruction that stopped an operating compressor or decreased the output frequency of the VSD powering the compressors and their respective motors. After the unload timer has completed its count, the compressor unloading control process then determines if only a single compressor or the lead compressor is currently in operation in step 704. If only a single compressor or the lead compressor is in operation, then the output frequency of the VSD is compared to the minimum VSD frequency to determine if the output frequency of the VSD is greater than the minimum VSD frequency in step 706. If the output frequency of the VSD is not greater than the minimum VSD frequency, then the LCHLT is evaluated to determine if it is less than the setpoint temperature minus the predetermined offset in step 708. If the LCHLT is less than the setpoint temperature minus the predetermined offset in step 708, then the process begins the shut down process for the compressor and the corresponding refrigeration system in step 710 and the process ends. The compressor is shut down if the LCHLT is less than the setpoint temperature minus the predetermined offset because the system has completed its operating objective, i.e., reaching the setpoint temperature, and, depending on the freezing point of the liquid in the chiller, to possibly avoid damaging the compressor or the corresponding refrigeration circuit by having too low a LCHLT. If the LCHLT is not less than the setpoint temperature minus the predetermined offset in step 708, then the compressor continues operating at the minimum speed and the process returns to step 402 for further monitoring.

If the output frequency of the VSD is greater than the minimum VSD frequency in step 706, then the VSD is controlled to power the compressor at a decreased VSD output frequency equal to the current output frequency minus a predetermined decrement amount in step 712. The predetermined decrement amount can be between about 0.1 Hz and about 25 Hz and is preferably between about 0.1 Hz and about 1 Hz. The predetermined decrement amount can preferably be calculated by a fuzzy logic control, however, any suitable control, e.g., a PID control, can be used. The decreased VSD output frequency can be decreased down to the minimum VSD output frequency. Once the compressor is adjusted to the decreased VSD output frequency, the process returns to step 402 of Figure 4 to further monitor system conditions.

Referring back to step 704, if any of the compressors besides the lead compressor are in operation, it is determined in step 714 if the VSD output frequency powering the compressors is equal to the minimum VSD output frequency. If the VSD output frequency is equal to the minimum VSD output frequency, then a lag compressor is stopped or shut down and the VSD is controlled to power the remaining operating compressors at the stop frequency in step 716. As discussed above, the stop frequency is preferably calculated as the VSD minimum frequency output, multiplied by the ratio of the number of operating compressors plus one divided by the number of operating compressors. Once the remaining compressors are started and accelerated to the stop frequency, the process returns to step 402 of Figure 4 to further monitor system conditions.

If the VSD output frequency is not equal to the minimum VSD output frequency in step 714, then the VSD is controlled to power the compressors at a decreased VSD output frequency equal to the current output frequency minus a predetermined decrement amount in step 712, as described in greater detail above. Once the compressors are adjusted to the decreased VSD output frequency, the process returns to step 402 of Figure 4 to further monitor system conditions.

While the above control process discussed the controlling of the system capacity by adjusting the output frequency of the VSD provided to the motors, it is to be understood that the output voltage of the VSD can also be adjusted to control the system capacity. In the above control processes, the VSD is preferably controlled to maintain a constant volts/Hz or constant torque mode of operation. The constant flux or constant volts/Hz mode of motor operation, which is used for a load with a substantially constant torque profile, such as a screw compressor, requires any increases or decreases in frequency provided to the motor to be matched by corresponding increases and decreases in the voltages provided to the motor. For example, a four pole induction motor can deliver twice its rated output horsepower and speed when operated at twice its rated voltage and twice its rated frequency. When in the constant flux or constant volts/Hz mode, any increase in the voltage to the motor results in an equivalent increase in the output horsepower of the motor. Similarly, any increase in the frequency to the motor results in an equivalent increase in the output speed of the motor.

When starting or stopping a compressor in order to adjust the capacity of the chiller system, such as described in steps 608 and 716, the VSD preferably follows the following procedure. First, the VSD is decelerated to a zero speed in a controlled stop. Next, the compressor to be added or removed is correspondingly enabled or disabled. The VSD is then controlled to provide output power to the compressors in operation at either the start frequency, when adding a compressor, or the stop frequency, when removing a compressor. It being understood that the VSD is also controlled to provide the appropriate voltage for the corresponding frequency. Finally, the VSD is accelerated to the appropriate frequency and voltage to power the compressors in operation.

In addition to the capacity control process described above with respect to Figures 4-7, the present invention also implements a capacity control process for high ambient air temperature conditions, such as those greater than 35 °C. The high ambient temperature capacity control process can be implemented as either a separate control process from the capacity control process described above or an integrated component of the capacity control process described above. The high ambient temperature capacity control process can be initiated when the outdoor ambient temperature is greater than a predetermined outdoor ambient temperature. The predetermined outdoor ambient temperature can be about 35 °C or greater and is preferably about 40.55 °C (105 °F). The high ambient temperature capacity control process can continue until the outdoor ambient temperature is less than the predetermined outdoor ambient temperature by a predetermined offset amount. Once the outdoor ambient temperature is less than the predetermined outdoor ambient temperature by the predetermined offset amount, the regular capacity control process resumes operation. The predetermined offset amount can be between about 0.55 °C (1 °F) and about 5.5 °C (10 °F), and is preferably about 2.77 °C (5 °F).

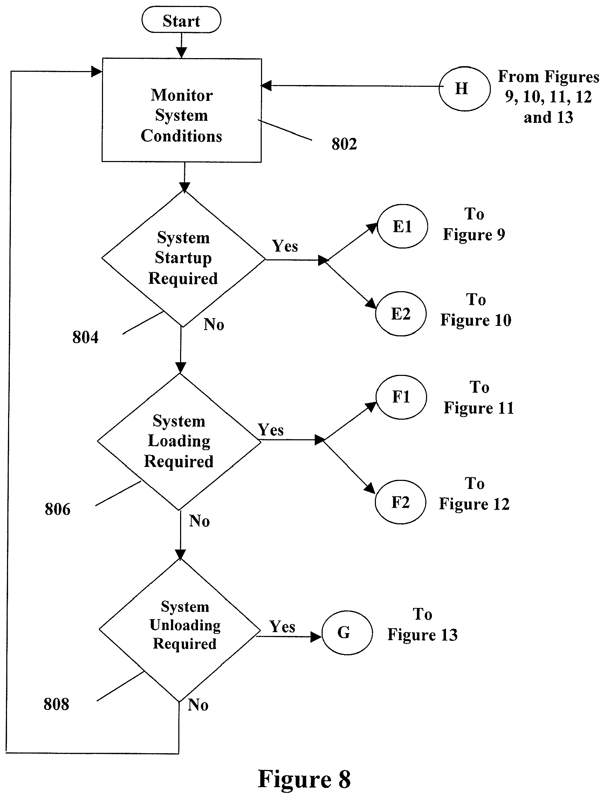

Figure 8 illustrates the basic high ambient temperature (HAT) capacity control process of the present invention. The process begins by monitoring the current operating conditions of the compressors and the corresponding chiller system at step 802. One or more sensors or other suitable monitoring devices are placed in the chiller system to monitor one or more operating conditions of the chiller system. The sensors provide signals to the control panel 110 corresponding to the measured system parameters. The measured system parameters of the chiller system can correspond to any suitable chiller system parameter that can be measured such as refrigerant temperature, refrigerant pressure, refrigerant flow, leaving chilled liquid temperature from the evaporator or any other suitable parameter.

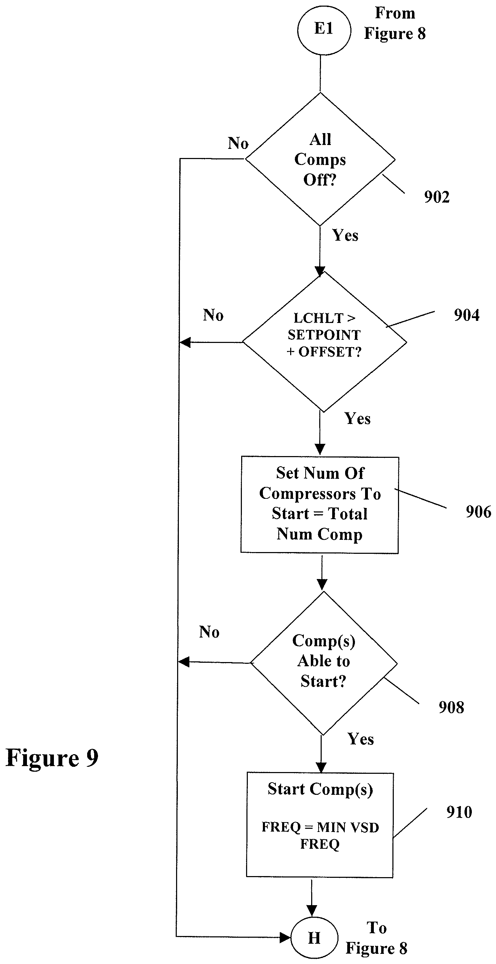

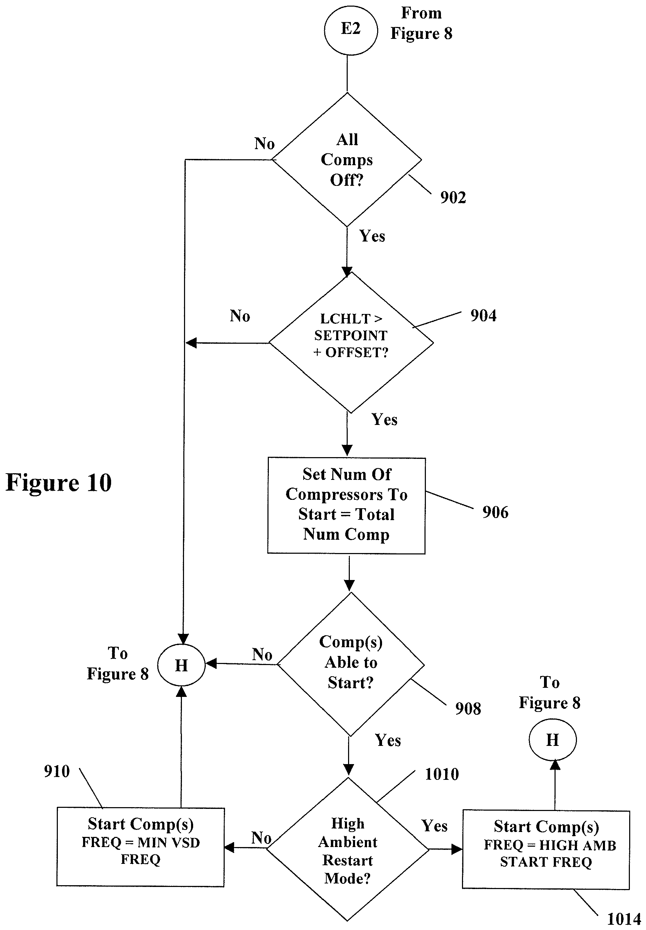

Based on the monitored system conditions obtained in step 802, the HAT control process then determines if an initial system startup, or restart, is required in step 804. An initial system startup involves the starting of one or more compressors to transition the system from an inactive or shut-down state to an active or operational state. If an initial system startup is determined to be necessary, the control passes to one of several embodiments of startup control processes (see Figures 9 and 10) described in greater detail below. If no initial system startup is necessary, usually because one or more compressors have been previously started, the HAT control process moves to step 806 to determine if system loading or increased system capacity is required.

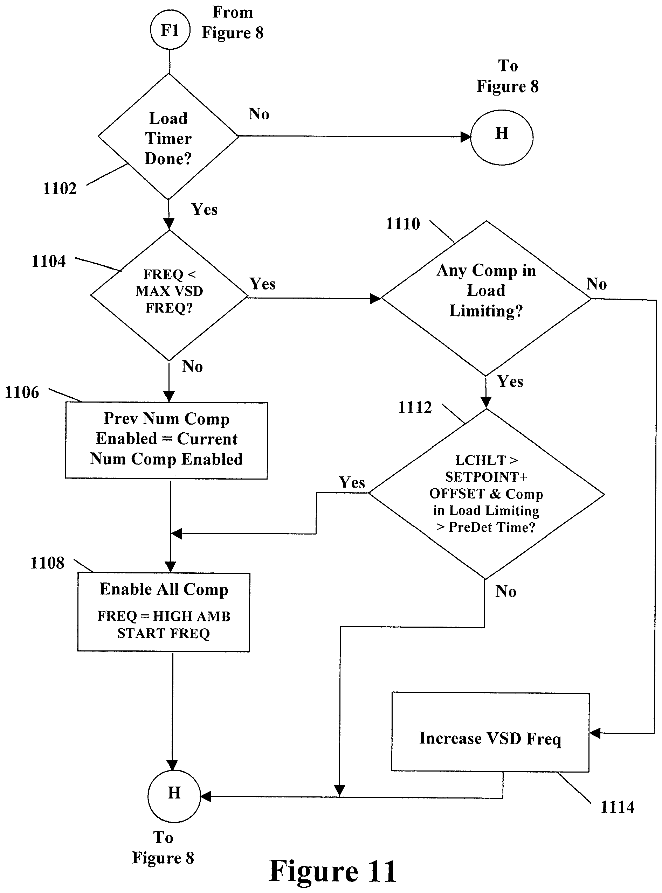

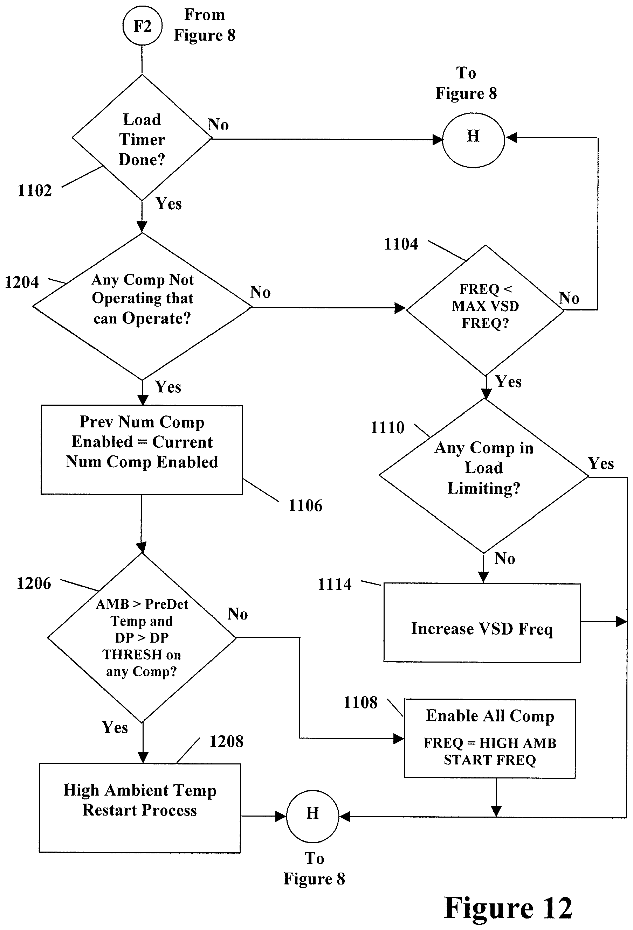

If the HAT control process determines that system loading is required in response to a demand for additional system capacity based the monitored system conditions in step 802, the HAT control process proceeds to one of several embodiments of system loading processes (see Figures 11 and 12) described in greater detail below to increase the load on the compressors in order to increase the system capacity. If system loading is not necessary, the HAT control process moves to step 808 to determine if system unloading or decreased system capacity is required.

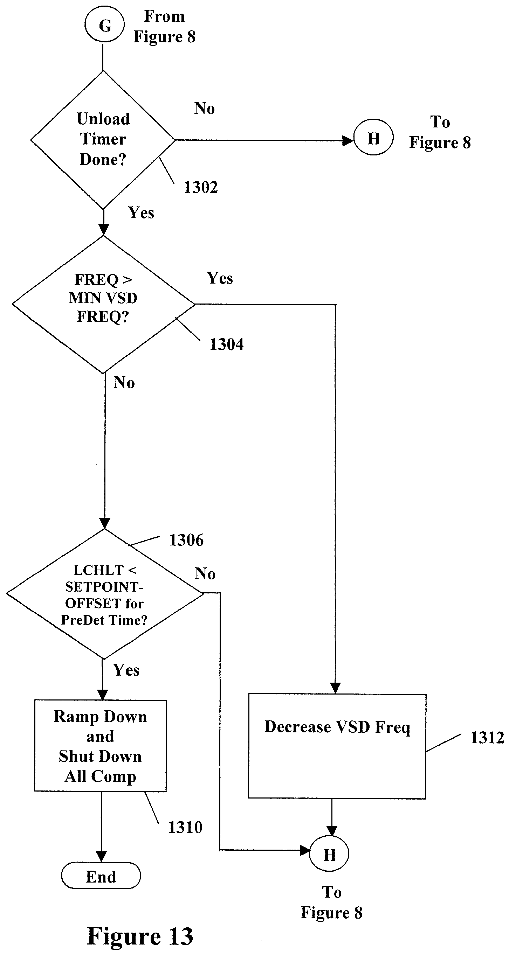

If the HAT control process determines that system unloading is required in response to a decrease in the demand for system capacity based on the monitored system conditions in step 802, the HAT control process proceeds to a system unloading process shown in Figure 13 and described in greater detail below to decrease the load on the compressors in order to decrease the system capacity. If system unloading is not necessary, the HAT control process returns to step 802 and repeats the process.

The basic HAT control process of Figure 8 preferably uses a fuzzy logic control technique, but can use any suitable control technique for determining when to start or restart the compressors of the chiller system, when to increase the capacity of the chiller system and when to decrease the capacity of the chiller system. In addition, while the basic HAT control process is shown Figure 8, the specific HAT control process can be implemented in several different embodiments. The one embodiment is illustrated in Figure 9, 11 and 13 and the other, and more preferred, embodiment is illustrated in Figures 10, 12 and 13. The specific control processes of Figures 9, 11, and 13 and Figures 10, 12 and 13 are preferably directed to the control process for the chiller system in response to one of the above-determinations being made by the basic HAT control process of Figure 8.

Figure 9 illustrates one embodiment of a startup control process for the HAT control process which is not part of the present invention. The startup control process involves the starting of one or more compressors to transition the system from an inactive or shutdown state to an active or operational state. The process begins in step 902 by determining if all of the compressors (and the corresponding motors and inverters) are off, inactive or shutdown. If one of the compressors is active or operational in step 902, the process returns to step 802 of Figure 8 to further monitor system conditions because the startup process is not required because one or more of the compressors is operational. Next, after determining that all the compressors are inactive or off in step 902, i.e., the compressors are not in operation, the startup control process determines if the leaving chilled liquid temperature (LCHLT) from the evaporator is greater than a setpoint temperature plus a predetermined offset or control range in step 904. The predetermined offset provides for a control region around the setpoint temperature, i.e., the desired LCHLT, to prevent frequent adjustments to the chiller system in response to very minor changes in system conditions.

The predetermined setpoint temperature and the predetermined offset can preferably be programmable or set by a user, but, it is to be understood that the predetermined setpoint temperature and the predetermined offset can also be preprogrammed into the system. The predetermined setpoint temperature can range between about -12.22 °C (10 °F) and about 15.55 °C (60 °F) depending on the particular liquid to be chilled in the evaporator. The predetermined setpoint temperature is preferably between about 4.44 °C (40 °F) and about 12.78 °C (55 °F) when water is to be chilled and is preferably between about -9.44 °C (15 °F) and about 12.78 °C (55 °F) when a glycol mixture is to be chilled. The predetermined offset can range between about ± 0.55 °C (1 °F) and about ± 2.78 °C (5 °F) and is preferably between about ± 0.83 °C (1.5 °F) and about ± 1.39 °C (2.5 °F).

If the LCHLT is greater than the setpoint temperature plus the predetermined offset in step 904, then all of the compressors are designated for starting in step 906. All of the compressors are designated for starting during high ambient air temperature conditions to reduce compressor cycling and compressor starting procedures, both of which involve stopping any then operating compressor in the system after the system has been started and is operational. Furthermore, at high ambient temperature conditions, the chiller system has a reduced cooling capacity thereby permitting a greater number of compressors to be started without generating an excess capacity, which may occur at lower ambient temperature conditions. If the LCHLT is not greater than the setpoint temperature plus the predetermined offset in step 904, then the process returns to step 802 of Figure 8 to further monitor system conditions. After all of the compressors are designated for starting, the compressors are tested in step 908 to determine if the compressors can be started or operated. In step 908, the control panel 110 can preferably determine if the compressors cannot be started or operated or are otherwise inoperable based on internal compressor controls or signals that prevent the starting of a compressor, (e.g., a "no run permissive" signal is present, the compressor has been faulted or the compressor is locked out), or based on other system controls or signals relating to problems or restrictions in the system, (e.g., the system switch has been turned off, the system has been faulted, the system has been locked out, or the system anti-recycle timer is active). If all the compressors cannot be started in step 908, the process returns to step 802 of Figure 8 to further monitor system conditions.

Once it is determined that one or more of the compressors are capable of being started and operated, those compressors are started in step 910 and operated at a frequency corresponding to the minimum frequency output by the VSD. The minimum frequency output by the VSD is dependent on the outdoor ambient temperature. The VSD preferably has a first (low) minimum frequency for all ambient temperatures less than or equal to a first ambient temperature setpoint. The first ambient temperature setpoint is preferably between about 40.55 °C (105 °F) and about 46.11 °C (115 °F). The minimum frequency for the VSD then increases as the ambient temperature rises above the first ambient temperature setpoint up to a second (high) minimum frequency at a second ambient temperature setpoint. The second ambient temperature setpoint is preferably between about 48.89 °C (120 °F) and about 54.44 °C (130 °F). The minimum frequency output by the VSD for compressor operation can range from about 15 Hz to about 120 Hz and is preferably about 50 Hz for the first minimum frequency and preferably about 95 Hz for the second minimum frequency. It is to be understood that the VSD may be capable of providing a minimum frequency output that is less than the minimum frequency output required for compressor operation. In addition, in step 910, a load timer and an unload timer are both set for a predetermined startup time. The predetermined startup time can range from about 10 seconds to about 60 seconds and is preferably about 30 seconds. Additional discussion of the operation of the load and unload timers is provided below with regard to Figures 11-13. After the compressors are started in step 910, the process returns to step 802 of Figure 8 to begin the process again and monitor system conditions.

Figure 10 illustrates the startup control process for the HAT control process of the present invention. The startup control process involves the starting or restarting of one or more compressors to transition the system from an inactive or shutdown state to an active or operational state. The process begins in step 902 by determining if all of the compressors are off, inactive or shutdown. If one of the compressors is active or operational in step 902, the process returns to step 802 of Figure 8 to further monitor system conditions. Next, after determining that all the compressors are inactive or off in step 902, i.e., the compressors are not in operation, the startup control process determines if the leaving chilled liquid temperature (LCHLT) from the evaporator is greater than a setpoint temperature plus a predetermined offset or control range in step 904.

If the LCHLT is not greater than the setpoint temperature plus the predetermined offset in step 904, then the process returns to step 802 of Figure 8 to further monitor system conditions. However, if the LCHLT is greater than the setpoint temperature plus the predetermined offset in step 904, then all of the compressors are designated for starting in step 906. After all of the compressors are designated for starting, the compressors are tested in step 908 to determine if the compressors can be started or operated. If all the compressors cannot be started in step 908, the process returns to step 802 of Figure 8 to further monitor system conditions.

Once it is determined that one or more of the compressors are capable of being started and operated, the control proceeds to step 1010 to determine if the compressors are to be started in a high ambient restart mode or a normal starting mode. A more detailed discussion of the high ambient restart mode is provided below with regard to Figure 12. If the compressors are not to be started in the high ambient restart mode, i.e., the compressors are to be started in the normal starting mode, the control proceeds to step 910 and the compressors are started and operated at a frequency corresponding to the minimum frequency output by the VSD, which minimum frequency is based on the outdoor ambient temperature. However, if the compressors are to be restarted in the high ambient restart mode, the control proceeds to step 1014 and the compressors are started and operated at a frequency corresponding to the high ambient starting frequency. The high ambient starting frequency is calculated as the "current" VSD frequency, i.e., the VSD frequency immediately before the high ambient restart was initiated, multiplied by the previous number of compressors enabled, i.e., the number of compressors operating immediately before the high ambient restart was initiated, and divided by the number of compressors that are being enabled or started. The calculation of the high ambient starting frequency is used to provide the same "total Hz" output of the VSD that was present prior to initiating the high ambient restart mode, while operating an additional number of compressors in the system as a result of the high ambient restart. In addition, in both steps 910 or 1014, a load timer and an unload timer are both set for the predetermined startup time. After the compressors are started in either step 910 or 1014, the process returns to step 802 of Figure 8 to begin the process again and monitor system conditions.

Figure 11 illustrates one embodiment of a system loading control process for the HAT control process which is not part of the present invention. The system loading control process involves either the activating or starting of one or more compressors in response to an increased load or demand on the system or the increasing of the output frequency from the VSD powering the compressors in order to increase the output capacity of the compressors in response to an increased load or demand on the system. The process begins in step 1102 by determining if a load timer or counter has completed its count. If the load timer has not completed its count, the system does not load any of the compressors and returns to step 802 of Figure 8 to further monitor system conditions until the load timer is finished or system conditions change. The load timer is used to give the system adequate time to respond to a prior control instruction that started or stopped a compressor or increased or decreased the output frequency of the VSD powering the compressors and their respective motors.

After the load timer has completed its count, the system loading control process then determines in step 1104 if the VSD output frequency powering the compressors is less than the maximum VSD output frequency. The VSD maximum output frequency can range between 120 Hz and 300 Hz and is preferably 200 Hz. However, it is to be understood that the VSD can have any suitable maximum output frequency. If the VSD output frequency is equal to the maximum VSD output frequency, then the control process assigns the previous number of compressors enabled to be equal to the current number of compressors enabled in step 1106. Next, in step 1108, any compressor that was not currently operating is enabled and all of the compressors are set to operate at the high ambient starting frequency. Control then returns to step 802 of Figure 8 to further monitor system conditions. In an alternate embodiment of the present invention, an additional step can be added to determine if there are any compressors that are not currently in operation that are capable of operation, which step would be similar to step 1204 in Figure 12. As discussed above, the high ambient starting frequency is calculated as the "current" VSD frequency, i.e., the VSD frequency immediately before the starting of the remaining compressors, multiplied by the previous number of compressors enabled, i.e., the number of compressors operating immediately before the remaining compressors are started, and divided by the number of compressors that are being enabled or started.

If the VSD output frequency is less than the maximum VSD output frequency in step 1104, then the compressors and their corresponding refrigerant circuits are checked or evaluated to determine if any are operating in a load limiting mode in step 1110. The load limiting mode is used to prevent damage to the compressors and corresponding refrigerant circuit by unloading the compressors when certain predetermined parameters or conditions are present. If no compressors or corresponding refrigerant circuits are operating in the load limiting mode, then the VSD is controlled to power the compressors at an increased VSD output frequency equal to the current output frequency plus a predetermined increment amount in step 1114. The predetermined increment amount can be between about 0.1 Hz and about 25 Hz and is preferably between about 0.1 Hz and about 1 Hz. The predetermined increment amount can preferably be calculated by a fuzzy logic controller or control technique, however, any suitable controller or control technique, e.g., a PID control, can be used. The increased VSD output frequency can be increased up to the maximum VSD output frequency. In addition, in step 1114, the load timer and the unload timer are both set for a predetermined adjustment time. The predetermined adjustment time can range from about 1 seconds to about 10 seconds and is preferably about 2 seconds. Once the compressors are adjusted to their new operating VSD frequency, the process returns to step 802 of Figure 8 to further monitor system conditions.

Referring back to step 1110, if the control process determines that one or more compressors and corresponding refrigerant circuits are operating in a load limiting mode, then the LCHLT is evaluated to determine if the LCHLT is greater than the setpoint temperature plus the predetermined offset for more than a predetermined load limiting time period in step 1112. The predetermined load limiting time period can range from about 1 minute to about 10 minutes and is preferably about 5 minutes. If the LCHLT is greater than the setpoint temperature plus the predetermined offset for the predetermined load limiting time period in step 1112, then the process proceeds to step 1108 to start any compressor that is not operating because the compressors that are operating are not able to satisfy the load and have their output restricted by operating in the load limiting mode for an extended period of time. If the LCHLT is not greater than the setpoint temperature plus the predetermined offset for the predetermined load limiting time period in step 1112, then the process returns to step 802 of Figure 8 to further monitor system conditions and give the compressor(s) operating in the load limiting mode an opportunity to correct any problems and resume normal operation.

Figure 12 illustrates an embodiment of a system loading control process for the HAT control process of the present invention. The system loading control process involves either the activating or starting of one or more compressors in response to an increased load or demand on the system or the increasing of the output frequency from the VSD powering the compressors in order to increase the output capacity of the compressors in response to an increased load or demand on the system. The process begins in step 1102 by determining if a load timer or counter has completed its count. If the load timer has not completed its count, the system does not load any of the compressors and returns to step 802 of Figure 8 to further monitor system conditions until the load timer is finished or system conditions change.

After the load timer has completed its count, the system loading control process then determines if there are any compressors that are not currently in operation that are capable of operation in step 1204. If there are any compressors that are not currently in operation, then the control process assigns the previous number of compressors enabled to be equal to the current number of compressors enabled in step 1106. Next, in step 1206, the ambient air temperature and discharge pressure (DP) of the compressors are evaluated to determine if the ambient air temperature is greater than a predetermined temperature and the DP is greater than predetermined DP threshold value on any compressor. The DP threshold value is calculated as the "current" VSD frequency multiplied by nine (9) and divided by twenty five (25) plus 1450. Both the VSD frequency and the DP threshold value are in x10 format. The predetermined temperature can range from about 32.22 °C (90 °F) to about 48.89 °C (120 °F) and is preferably about 40.55 °C (105 °F)

If both the ambient air temperature is greater than the predetermined temperature and the DP is greater than the DP threshold value on any compressor in step 1206, then the process proceeds to step 1208 to initiate a high ambient temperature restart process. The high ambient temperature restart process ramps down and then deactivates all operating compressors. In addition, while the compressors are being shutdown, the DC link bus in the VSD is still being charged or active. The charging of the DC link bus enables a faster response time in restarting the compressors. Finally, a flag or other suitable notification technique is used to indicate that a high temperature restart is required in step 1010 of the startup process of Figure 10. The process then returns to step 802 of Figure 8 to further monitor system conditions and to begin restarting the compressors in the high ambient temperature mode. If one or both of the ambient air temperature is less than the predetermined temperature and the DP is less than the DP threshold value on any compressor in step 1206, then the process proceeds to step 1108. In step 1108, any compressor that was not currently operating is enabled and the compressors are set to operate at the high ambient starting frequency and control returns to step 802 of Figure 8 to further monitor system conditions.

Referring back to step 1204, if all the compressors are currently operating, it is determined in step 1114 if the VSD output frequency powering the compressors is less than the maximum VSD output frequency. If the VSD output frequency is equal to the maximum VSD output frequency, then the process returns to step 802 of Figure 8 to further monitor system conditions because no additional capacity can be generated by the system. However, if the VSD output frequency is less than the maximum VSD output frequency, then the compressors and their corresponding refrigerant circuits are checked or evaluated to determine if any compressors are operating in a load limiting mode in step 1110. If no compressors or corresponding refrigerant circuits are operating in the load limiting mode, then the VSD is controlled to power the compressors at an increased VSD output frequency equal to the current output frequency plus a predetermined increment amount in step 1114. The predetermined increment amount can be between about 0.1 Hz and about 25 Hz and is preferably between about 0.1 Hz and about 1 Hz. The predetermined increment amount can preferably be calculated by a fuzzy logic controller or control technique, however, any suitable controller or control technique, e.g., a PID control, can be used. The increased VSD output frequency can be increased up to the maximum VSD output frequency. In addition, in step 1114, the load timer and the unload timer are both set for the predetermined adjustment time. Once the compressors are adjusted to their new operating VSD frequency, the process returns to step 802 of Figure 8 to further monitor system conditions. Referring back to step 1110, if the control process determines that one or more compressors and corresponding refrigerant circuits are operating in a load limiting mode, then the load timer and the unload timer are both set for the predetermined adjustment time and the process returns to step 802 of Figure 8 to further monitor system conditions.

Figure 13 illustrates a system unloading control process for either embodiment of the HAT control process of the present invention. The system unloading control process involves the deactivating or shutting down of one or more compressors in response to a reduced load or demand for the system or the decreasing of the output frequency from the VSD powering the compressors in order to decrease the output capacity of the compressors in response to a decreased load or demand on the system. The process begins in step 1302 by determining if an unload timer or counter has completed its count. If the unload timer has not completed its count, the system does not unload any of the compressors and returns to step 802 of Figure 8 to further monitor system conditions until the unload timer is finished or system conditions change.

The unload timer is used to give the system adequate time to respond to a prior control instruction that started or stopped a compressor or increased or decreased the output frequency of the VSD powering the compressors and their respective motors. After the unload timer has completed its count, the compressor unloading control process then determines if the output frequency of the VSD is greater than a minimum VSD frequency, which minimum frequency is dependent on the outdoor ambient temperature, in step 1304. If the output frequency of the VSD is not greater than the minimum VSD frequency, then the LCHLT is evaluated to determine if the LCHLT is less than the setpoint temperature minus the predetermined offset for more than a predetermined time period in step 1306. The predetermined time period can range from about 10 seconds to about 60 seconds and is preferably about 30 seconds. If the LCHLT is less than the setpoint temperature minus the predetermined offset for the predetermined time period in step 1306, then the process begins the shut down process for all operating compressors and the corresponding refrigeration system(s) in step 1310 and the process ends. The use of the predetermined time period in step 1306 is used to prevent the short cycling of the system and to confirm that the load is low enough to justify the entire system being shut down. The compressors are shut down if the LCHLT is less than the setpoint temperature minus the predetermined offset for the predetermined time period because the system has completed its operating objective, i.e., reaching the setpoint temperature, and, depending on the freezing point of the liquid in the chiller, to possibly avoid damaging the compressors or the corresponding refrigeration circuits by having too low a LCHLT. If the LCHLT is not less than the setpoint temperature minus the predetermined offset for the predetermined time period in step 1306, then the process returns to step 802 for further monitoring.

If the output frequency of the VSD is greater than the minimum VSD frequency in step 1304, then the VSD is controlled to power the compressors at a decreased VSD output frequency equal to the current output frequency minus a predetermined decrement amount in step 1312. The predetermined decrement amount can be between about 0.1 Hz and about 25 Hz and is preferably between about 0.1 Hz and about 1 Hz. The predetermined decrement amount can preferably be calculated by a fuzzy logic control, however, any suitable control, e.g., a PID control, can be used. The decreased VSD output frequency can be decreased down to the minimum VSD output frequency. In addition, in step 1312, the load timer and the unload timer are both set for the predetermined adjustment time. The predetermined adjustment time can range from about 1 seconds to about 10 seconds and is preferably about 2 seconds. Once the compressors are adjusted to their new operating VSD frequency, the process returns to step 802 of Figure 8 to further monitor system conditions.

While the above control process discussed the controlling of the system capacity under high ambient temperature conditions by adjusting the output frequency of the VSD provided to the motors, it is to be understood that the output voltage of the VSD can also be adjusted to control the system capacity. In the above control processes, the VSD is preferably controlled to maintain a constant volts/Hz or constant torque mode of operation. The constant flux or constant volts/Hz mode of motor operation, which is used for a load with a substantially constant torque profile, such as a screw compressor, requires any increases or decreases in frequency provided to the motor to be matched by corresponding increases and decreases in the voltages provided to the motor. For example, a four pole induction motor can deliver twice its rated output horsepower and speed when operated at twice its rated voltage and twice its rated frequency. When in the constant flux or constant volts/Hz mode, any increase in the voltage to the motor results in an equivalent increase in the output horsepower of the motor. Similarly, any increase in the frequency to the motor results in an equivalent increase in the output speed of the motor.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method for controlling the capacity of a liquid chiller system (300) having a plurality of compressors (302, 303), the method comprising the steps of:
providing a variable speed drive (104) having a plurality of inverters (206), wherein each inverter (206) is configured to power a corresponding motor (106) of the plurality of compressors (302, 303);
**characterized by**
measuring the ambient air temperature;
controlling the variable speed drive (104) with a capacity control program in response to the ambient air temperature being less than a first predetermined temperature; and
controlling the variable speed drive (104) with a high ambient air temperature capacity control program in response to the ambient air temperature being greater than a second predetermined temperature, wherein the second predetermined temperature is greater than the first predetermined temperature by a predetermined offset temperature, wherein the high ambient air temperature capacity control program being configured to override the capacity control program and provide improved control of the liquid chiller system (300) at high ambient air temperature conditions;
wherein the high ambient temperature capacity control program comprises the steps of:
monitoring (402) at least one operating condition of the chiller system (300);
executing (404) a system starting process in response to a determination to
provide output capacity based on the at least one monitored operating condition and the plurality of compressors (302, 303) being in an inactive state;
executing (406) a system loading process in response to a determination to increase output capacity based on the at least one monitored operating condition; and
executing (408) a system unloading process in response to a determination to decrease output capacity based on the at least one monitored operating condition;
wherein the step of executing a system loading process includes:
determining (1104) if an operating frequency of the plurality of inverters (206) is less than a maximum inverter frequency;
increasing (1114) the operating frequency of the plurality of inverters (206) by a predetermined frequency amount in response to a determination that the operating frequency of the plurality of inverters (206) is less than a maximum inverter frequency;
determining (1204) whether any compressor of the plurality of compressors (302, 303) not currently in operation is capable of starting; and
executing the step (1104) of determining if an operating frequency of the plurality of inverters (206) is less than a maximum inverter frequency in response to a determination that there is no compressor (302, 303) not currently in operation capable of starting;
determining whether a discharge pressure on any compressor (302, 303) of the plurality of compressors (302, 303) is greater than a predetermined discharge pressure;
determining whether the ambient air temperature is greater than a predetermined ambient temperature; and
initiating (1208) a high ambient restart process ramping down and deactivating all operating compressors before restarting one or more of the compressors response to a determination (1204) that there is a compressor (302, 303) not currently in operation capable of starting and a determination (1206) that a discharge pressure on any compressor (302, 303) of the plurality of compressors (302, 303) is greater than a predetermined discharge pressure, and a determination that the ambient air temperature is greater than a predetermined ambient temperature, wherein the one or more of the compressors (302, 303) to be restarted are started and operated at a frequency corresponding to the high ambient starting frequency, which is the operating frequency of the variable speed drive immediately before the high ambient restart, multiplied by the previous number of compressors enabled, and divided by the number of compressors that are being started.

2. The method of claim 1 wherein the second predetermined temperature is equal to or greater than about 35° C (95 °F) and the predetermined offset temperature is between about 0.55° C (1 ° F) and about 5.55° C(10°F).

3. The method of claim 1 further comprising the step of stopping the high ambient air temperature capacity control program and resuming operation with the capacity control program in response to the ambient air temperature being less than the second predetermined temperature minus a predetermined offset.

4. The method of claim 1 wherein the step of executing a system starting process includes:
determining whether a chilled liquid temperature is greater than a setpoint temperature plus an offset temperature;
designating the plurality of compressors for starting in response to a determination that the chilled liquid temperature is greater than a setpoint temperature plus an offset temperature;
determining whether each compressor (302, 303) of the plurality of compressors (302, 303) is capable of starting; and
starting each compressor (302, 303) of the plurality of compressors (302, 303) determined to be capable of starting.

5. The method of claim 4 wherein the step of starting each compressor (302, 303) of the plurality of compressors (302, 303) includes operating an inverter (206) of the plurality inverters (206) for the corresponding compressor (302, 303) at a predetermined frequency.

6. The method of claim 5 wherein the predetermined frequency is dependent on the ambient air temperature.

7. The method of claim 1 wherein the step of executing a system loading process includes:
starting all compressors (302, 303) not currently in operation that are capable of starting in response to a determination that a discharge pressure on any compressor (302, 303) of the plurality of compressors (302, 303) is less than a predetermined discharge pressure, or a determination that the ambient air temperature is less than a predetermined ambient temperature; and
operating the plurality of inverters (206) for the corresponding compressors (302, 303) at a predetermined frequency.

8. The method of claim 7 wherein the predetermined frequency is the operating frequency of the plurality of inverters (206) multiplied by a ratio of a number of previously operating compressors (302, 303) divided by a number of compressors (302, 303) to be operated.

9. A multiple compressor liquid chiller system (300) comprising:
a plurality of compressors (302, 303), each compressor (302, 303) of the plurality of compressors (302, 303) being driven by a corresponding motor (106), the plurality of compressors (302, 303) being incorporated into at least one refrigerant circuit, each refrigerant circuit comprising at least one compressor (302, 303) of the plurality of compressors (302, 303), a condenser arrangement (308) and an evaporator arrangement (310) connected in a closed refrigerant loop;
a variable speed drive (104) to power the corresponding motors (106) of the plurality of compressors (302, 303), the variable speed drive (104) comprising a converter stage (202), a DC link stage (204) and an inverter stage, the inverter stage having a plurality of inverters (206) each electrically connected in parallel to the DC link stage (204) and each powering a corresponding motor (106) of the plurality of compressors (302, 303);
a control panel (110) to control the variable speed drive (104) to generate a preselected system capacity from the plurality of compressors (302, 303),
the multiple compressor liquid chiller system (300) being **characterized in that** the control panel (110) being configured to control the variable speed drive (104) with a capacity control program in response to an ambient air temperature being less than a first predetermined temperature and to control the variable speed drive (104) with a high ambient air temperature capacity control program in response to the ambient air temperature being greater than a second predetermined temperature, wherein the second predetermined temperature is greater than the first predetermined temperature by a predetermined offset temperature, wherein the high ambient air temperature capacity control program being configured to provide improved control of the liquid chiller system (300) at high ambient air temperature conditions;
means for monitoring at least one operating condition of the liquid chiller system (300); and
the high ambient air temperature capacity control program comprises:
means for determining capacity adjustments in the plurality of compressors (302, 303) based on the at least one monitored operating condition;
a system starting process (404) to start the plurality of compressors (302, 303), the system starting process being executed in response to a determination to provide output capacity;
a system loading process (406) to increase output capacity of the plurality of compressors (302, 303), the system loading process being executed in response to a determination to increase output capacity; and
a system unloading process (408) decrease output capacity of the plurality of compressors (302, 303), the system unloading process being executed in response to a determination to decrease output capacity;
wherein the system loading process includes
determining (1104) if an operating frequency of the plurality of inverters (206) is less than a maximum inverter frequency;
increasing (1114) the opreating frequency of the plurality of inverters (206) by a predetermined frequency amount in response to a determination that the operating frequency of the plurality of inverters (206) is less than a maximum inverter frequency;
determining (1204) whether any compressor of the plurality of compressors (302, 303) not currently in operation is capable of starting; and executing the step (1104) of determining if an operating frequency of the plurality of inverters (206) is less than a maximum inverter frequency in response to a determination that there is no compressor (302, 303) not currently in operation capable of starting; and initiating (1208) a high ambient restart process to ramp down and deactivate all operating compressors before restarting one or more of the plurality of compressors (302, 303), the high ambient restart process being executed in response to a determination that there is a compressor (302, 303) not currently in operation capable of starting and a determination that a discharge pressure on any compressor (302, 303) of the plurality of compressors (302, 303) is greater than a predetermined discharge pressure, and a determination that the ambient air temperature is greater than a predetermined ambient temperature, wherein the one or more of the compressors (302, 303) to be restarted are started and operated at a frequency corresponding to the high ambient starting frequency, which is the operating frequency of the variable speed drive immediately before the high ambient restart, multiplied by the previous number of compressors enabled, and divided by the number of compressors that are being started.

10. The multiple compressor chiller system of claim 9 wherein the second predetermined temperature is equal to or greater than about 35°C (95 ° F) and the predetermined offset temperature is between about 0.55° C (1 ° F) and about 5.55° C(10 ° F).

## Patentansprüche

1. Verfahren zum Steuern der Kapazität eines Flüssigkeitskühlersystems (300), das mehrere Verdichter (302, 303) besitzt, wobei das Verfahren folgende Schritte umfasst:
Bereitstellen eines Antriebs (104) mit variabler Drehzahl, der mehrere Inverter (206) besitzt, wobei jeder Inverter (206) konfiguriert ist, einen entsprechenden Motor (106) der mehreren Verdichter (302, 303) anzutreiben;
**gekennzeichnet durch**
Messen der Umgebungslufttemperatur;
Steuern des Antriebs (104) mit variabler Drehzahl mit einem Leistungssteuerungsprogramm als Reaktion darauf, dass die Umgebungslufttemperatur geringer als eine erste vorgegebene Temperatur ist; und
Steuern des Antriebs (104) mit variabler Drehzahl mit einem Leistungssteuerungsprogramm für hohe Umgebungslufttemperatur als Reaktion darauf, dass die Umgebungslufttemperatur höher als eine zweite vorgegebene Temperatur ist, wobei die zweite vorgegebene Temperatur um einen vorgegebenen Temperaturversatz höher als die erste vorgegebene Temperatur ist, wobei das Leistungssteuerungsprogramm für hohe Umgebungslufttemperatur konfiguriert ist, das Leistungssteuerungsprogramm außer Kraft zu setzen und eine verbesserte Steuerung des Flüssigkeitskühlersystems (300) bei hohen Umgebungslufttemperaturbedingungen bereitzustellen;
wobei das Leistungssteuerungsprogramm für hohe Umgebungslufttemperatur die folgenden Schritte umfasst:
Überwachen (402) mindestens eines Betriebszustands des Kühlersystems (300);
Ausführen (404) eines Systemstartvorgangs als Reaktion auf eine Bestimmung, eine Ausgabekapazität basierend auf dem mindestens einen überwachten Betriebszustand und den mehreren, in einem inaktiven Zustand befindlichen Verdichtern (302, 303) bereitzustellen;
Ausführen (406) eines Systemladevorgangs als Reaktion auf eine Bestimmung, eine Ausgabekapazität basierend auf dem mindestens einen überwachten Betriebszustand zu erhöhen; und
Ausführen (408) eines Systementladungsvorgangs als Reaktion auf eine Bestimmung, eine Ausgabekapazität basierend auf dem mindestens einen überwachten Betriebszustand zu verringern;
wobei der Schritt des Ausführens eines Systemladevorgangs Folgendes enthält:
Bestimmen (1104), ob eine Betriebsfrequenz der mehreren Inverter (206) geringer als eine maximale Inverterfrequenz ist;
Erhöhen (1114) der Betriebsfrequenz der mehreren Inverter (206) um einen vorgegebenen Frequenzbetrag als Reaktion auf eine Bestimmung, dass die Betriebsfrequenz der mehreren Inverter (206) geringer als eine maximale Inverterfrequenz ist;
Bestimmen (1204), ob ein momentan nicht in Betrieb befindlicher Verdichter der mehreren Verdichter (302, 303) in der Lage ist, zu starten; und
Ausführen des Schritts (1104) des Bestimmens, ob eine Betriebsfrequenz der mehreren Inverter (206) geringer als eine maximale Inverterfrequenz ist, als Reaktion auf eine Bestimmung, dass es keinen momentan nicht in Betrieb befindlichen Verdichter (302, 303) gibt, der in der Lage ist, zu starten;
Bestimmen, ob ein Auslassdruck bei einem Verdichter (302, 303) der mehreren Verdichter (302, 303) größer als ein vorgegebener Auslassdruck ist;
Bestimmen, ob die Umgebungslufttemperatur höher als eine vorgegebene Umgebungstemperatur ist; und
Einleiten (1208) eines Hochumgebungs-Neustartvorgangs, der alle in Betrieb befindlichen Verdichter herunterfährt und deaktiviert, bevor er einen oder mehrere der Verdichter als Reaktion auf eine Bestimmung (1204), dass es einen momentan nicht in Betrieb befindlichen Verdichter (302, 303) gibt, der in der Lage ist, zu starten, und eine Bestimmung (1206), dass ein Auslassdruck bei einem Verdichter (302, 303) der mehreren Verdichter (302, 303) höher als ein vorgegebener Auslassdruck ist, und eine Bestimmung, dass die Umgebungslufttemperatur höher als eine vorgegebene Umgebungstemperatur ist, neu startet, wobei der eine oder die mehreren der neu zu startenden Verdichter (302, 303) gestartet und bei einer Frequenz betrieben werden, die der hohen Umgebungsstartfrequenz entspricht, die die Betriebsfrequenz des Antriebs mit variabler Drehzahl unmittelbar vor dem Hochumgebungs-Neustart, multipliziert mit der vorherigen Anzahl aktivierter Verdichter und dividiert durch die Anzahl der Verdichter, die gestartet werden, ist.

2. Verfahren nach Anspruch 1, wobei die zweite vorgegebene Temperatur gleich oder höher als etwa 35 °C (95 °F) ist und der vorgegebene Temperaturversatz zwischen etwa 0,55 °C (1 °F) und etwa 5,55 °C (10 °F) liegt.

3. Verfahren nach Anspruch 1, das ferner den Schritt des Anhaltens des Leistungssteuerungsprogramm für hohe Umgebungslufttemperatur und des Fortsetzens des Betriebs mit dem Leistungssteuerungsprogramm als Reaktion darauf, dass die Umgebungslufttemperatur niedriger als die um einen vorgegebenen Versatz verringerte zweite vorgegebene Temperatur ist, umfasst.

4. Verfahren nach Anspruch 1, wobei der Schritt des Ausführens eines Systemstartvorgangs Folgendes umfasst:
Bestimmen, ob eine Temperatur einer gekühlten Flüssigkeit höher als eine um einen Temperaturversatz erhöhte Solltemperatur ist;
Benennen der mehreren Verdichter zum Starten als Reaktion auf eine Bestimmung, dass die Temperatur der gekühlten Flüssigkeit höher als eine um einen Temperaturversatz erhöhte Solltemperatur ist;
Bestimmen, ob jeder Verdichter (302, 303) der mehreren Verdichter (302, 303) in der Lage ist, zu starten; und
Starten jedes Verdichters (302, 303) der mehreren Verdichter (302, 303), für den bestimmt wurde, dass er in der Lage ist, zu starten.

5. Verfahren nach Anspruch 4, wobei der Schritt des Startens jedes Verdichters (302, 303) der mehreren Verdichter (302, 303) das Betreiben eines Inverters (206) der mehreren Inverter (206) für den zugehörigen Verdichter (302, 303) bei einer vorgegebenen Frequenz umfasst.

6. Verfahren nach Anspruch 5, wobei die vorgegebene Frequenz von der Umgebungslufttemperatur abhängig ist.

7. Verfahren nach Anspruch 1, wobei der Schritt des Ausführens eines Systemladevorgangs Folgendes umfasst:
Starten aller momentan nicht in Betrieb befindlichen Verdichter (302, 303), die in der Lage sind, in Reaktion auf eine Bestimmung, dass ein Auslassdruck an einem Verdichter (302, 303) der mehreren Verdichter (302, 303) geringer als ein vorgegebener Auslassdruck ist, oder eine Bestimmung, dass die Umgebungslufttemperatur geringer als eine vorgegebene Umgebungstemperatur ist, zu starten; und
Betreiben der mehreren Inverter (206) für die zugehörigen Verdichter (302, 303) bei einer vorgegebenen Frequenz.

8. Verfahren nach Anspruch 7, wobei die vorgegebene Frequenz die Betriebsfrequenz der mehreren Inverter (206), multipliziert mit einem Verhältnis einer Anzahl zuvor in Betrieb befindlicher Verdichter (302, 303), geteilt durch eine Anzahl zu betreibender Verdichter (302, 303) ist.

9. Mehrfachverdichter-Flüssigkeitskühlersystem (300), das Folgendes umfasst:
mehrere Verdichter (302, 303), wobei jeder Verdichter (302, 303) der mehreren Verdichter (302, 303) durch einen zugehörigen Motor (106) angetrieben wird, die mehreren Verdichter (302, 303) in mindestens einen Kältemittelkreislauf integriert sind und jeder Kältemittelkreislauf mindestens einen Verdichter (302, 303) der mehreren Verdichter (302, 303), eine Kondensatoranordnung (308) und eine Verdampferanordnung (310) enthält, die in einem geschlossenen Kältemittelkreislauf verbunden sind;
einen Antrieb (104) mit variabler Drehzahl zum Antreiben der zugehörigen Motoren (106) der mehreren Verdichter (302, 303), wobei der Antrieb mit variabler Drehzahl (104) eine Wandlerstufe (202), eine Gleichstromverbindungsstufe (204) und eine Inverterstufe umfasst, wobei die Inverterstufe mehrere Inverter (206) besitzt, die mit der Gleichstromverbindungsstufe (204) elektrisch parallel geschaltet sind und die jeweils einen zugehörigen Motor (106) der mehreren Verdichter (302, 303) antreiben;
ein Bedienfeld (110) zum Steuern des Antriebs (104) mit variabler Drehzahl, um eine vorgewählte Systemkapazität aus den mehreren Verdichtern (302, 303) zu erzeugen, wobei das Mehrfachverdichter-Flüssigkeitskühlersystem (300) **dadurch gekennzeichnet ist, dass**
das Bedienfeld (110) konfiguriert ist, den Antrieb (104) mit variabler Drehzahl mit einem Leistungssteuerungsprogramm als Reaktion darauf zu steuern, dass die Umgebungslufttemperatur geringer als eine erste vorgegebene Temperatur ist, und den Antrieb (104) mit variabler Drehzahl mit einem Leistungssteuerungsprogramm für hohe Umgebungslufttemperatur als Reaktion darauf zu steuern, dass die Umgebungslufttemperatur höher als eine zweite vorgegebene Temperatur ist, wobei die zweite vorgegebene Temperatur um einen vorgegebenen Temperaturversatz höher als die erste vorgegebene Temperatur ist, wobei das Leistungssteuerungsprogramm für hohe Umgebungslufttemperatur konfiguriert ist, eine verbesserte Steuerung des Flüssigkeitskühlersystems (300) unter Bedingungen einer hohen Umgebungslufttemperatur bereitzustellen;
Mittel zum Überwachen mindestens eines Betriebszustands des Flüssigkeitskühlersystems (300); und
das Leistungssteuerungsprogramm für hohe Umgebungslufttemperatur Folgendes umfasst:
Mittel zum Ermitteln von Leistungsanpassungen in den mehreren Verdichtern (302, 303) basierend auf dem mindestens einen überwachten Betriebszustand;
einen Systemstartvorgang (404) zum Starten der mehreren Verdichter (302, 303), wobei der Systemstartvorgang als Reaktion auf eine Bestimmung, eine Ausgabekapazität bereitzustellen, ausgeführt wird;
einen Systemladevorgang (406), um die eine Ausgabekapazität der mehreren Verdichter (302, 303) zu erhöhen, wobei der Systemladevorgang als Reaktion auf eine Bestimmung ausgeführt wird, die eine Ausgabekapazität zu erhöhen; und
einen Systementladungsvorgang (408), um die eine Ausgabekapazität der mehreren Verdichter (302, 303) zu verringern, wobei der Systementladungsvorgang als Reaktion auf eine Bestimmung ausgeführt wird, die eine Ausgabekapazität zu verringern;
wobei der Systemladevorgang das Bestimmen (1104), ob eine Betriebsfrequenz der mehreren Inverter (206) geringer als eine maximale Inverterfrequenz ist, umfasst;
Erhöhen (1114) der Betriebsfrequenz der mehreren Inverter (206) um einen vorgegebenen Frequenzbetrag als Reaktion auf eine Bestimmung, dass die Betriebsfrequenz der mehreren Inverter (206) geringer als eine maximale Inverterfrequenz ist;
Bestimmen (1204), ob ein momentan nicht in Betrieb befindlicher Verdichter der mehreren Verdichter (302, 303) in der Lage ist, zu starten; und Ausführen des Schrittes (1104) des Bestimmens, ob eine Betriebsfrequenz der mehreren Inverter (206) geringer als eine maximale Inverterfrequenz ist, als Reaktion auf eine Bestimmung, dass es keinen momentan nicht in Betrieb befindlichen Verdichter (302, 303) gibt, der in der Lage ist, zu starten; und Einleiten (1208) eines Hochumgebungs-Neustartvorgangs, der alle in Betrieb befindlichen Verdichter herunterfährt und deaktiviert, bevor er einen oder mehrere der mehreren Verdichter (302, 303) neu startet, wobei der Hochumgebungs-Neustartvorgang als Reaktion auf eine Bestimmung ausgeführt wird, dass es einen momentan nicht in Betrieb befindlichen Verdichter (302, 303) gibt, der in der Lage ist, zu starten, und eine Bestimmung, dass ein Auslassdruck bei einem Verdichter (302, 303) der mehreren Verdichter (302, 303) größer als ein vorgegebener Auslassdruck ist und eine Bestimmung, dass die Umgebungslufttemperatur größer als eine vorgegebene Umgebungstemperatur ist, wobei der eine oder die mehreren neu zu startenden Verdichter (302, 303) gestartet und bei einer Frequenz entsprechend der hohen Umgebungsstartfrequenz betrieben werden, die die Betriebsfrequenz des Antriebs mit variabler Drehzahl unmittelbar vor dem Hochumgebungs-Neustart, multipliziert mit der vorherigen Anzahl aktivierter Verdichter und dividiert durch die Anzahl der Verdichter, die gestartet werden, ist.

10. Mehrfachverdichter-Flüssigkeitskühlersystem nach Anspruch 9, wobei die zweite vorgegebene Temperatur gleich oder höher als etwa 35 °C (95 °F) ist, und der vorgegebene Temperaturversatz zwischen etwa 0,55 °C (1 °F) und etwa 5,55 °C (10 °F) liegt.

## Revendications

1. Procédé de régulation de la capacité d'un système refroidisseur de liquide (300) comprenant une pluralité de compresseurs (302, 303), le procédé comprenant les étapes consistant à :
fournir un entraînement à vitesse variable (104) comprenant une pluralité d'inverseurs (206), chaque inverseur (206) étant conçu pour alimenter un moteur (106) correspondant de la pluralité de compresseurs (302, 303) ;
le procédé étant **caractérisé par** les étapes consistant à :
mesurer la température d'air ambiant ;
réguler l'entraînement à vitesse variable (104) au moyen d'un programme de régulation de capacité en réponse au fait que la température d'air ambiant est inférieure à une première température prédéterminée ; et
réguler l'entraînement à vitesse variable (104) au moyen d'un programme de régulation de capacité à température d'air ambiant élevée en réponse au fait que la température d'air ambiant est supérieure à une seconde température prédéterminée, la seconde température prédéterminée étant supérieure à la première température prédéterminée d'une température de décalage prédéterminée, le programme de régulation de capacité à température d'air ambiant élevée étant conçu pour remplacer le programme de régulation de capacité et fournir une régulation améliorée du système refroidisseur de liquide (300) dans des conditions de température d'air ambiant élevée ;
le programme de régulation de capacité à température d'air ambiant élevée comprenant les étapes consistant à :
surveiller (402) au moins une condition de fonctionnement du système refroidisseur (300) ;
exécuter (404) un processus de démarrage de système en réponse à une détermination de fournir une capacité de sortie sur la base de l'au moins une condition de fonctionnement surveillée et de la pluralité de compresseurs (302, 303) étant dans un état inactif ;
exécuter (406) un processus de remplissage de système en réponse à une détermination d'augmenter une capacité de sortie sur la base de l'au moins une condition de fonctionnement surveillée ; et
exécuter (408) un processus de déchargement de système en réponse à une détermination de diminuer une capacité de sortie sur la base de l'au moins une condition de fonctionnement surveillée ;
l'étape d'exécution d'un processus de chargement de système consistant à :
déterminer (1104) si une fréquence de fonctionnement de la pluralité d'inverseurs (206) est inférieure à une fréquence d'inverseur maximale ;
augmenter (1114) la fréquence de fonctionnement de la pluralité d'inverseurs (206) d'une amplitude de fréquence prédéterminée en réponse à une détermination du fait que la fréquence de fonctionnement de la pluralité d'inverseurs (206) est inférieure à une fréquence d'inverseur maximale ;
déterminer (1204) si parmi la pluralité de compresseurs (302, 303) un compresseur quelconque qui n'est pas en cours de fonctionnement est capable de démarrer ; et
exécuter l'étape (1104) de détermination si une fréquence de fonctionnement de la pluralité d'inverseurs (206) est inférieure à une fréquence d'inverseur maximale en réponse à une détermination du fait qu'il n'y a aucun compresseur (302, 303) qui n'est pas en cours de fonctionnement et qui est capable de démarrer ;
déterminer si une pression de décharge sur un quelconque compresseur (302, 303) de la pluralité de compresseurs (302, 303) est supérieure à une pression de décharge prédéterminée ;
déterminer si la température d'air ambiant est supérieure à une température ambiante prédéterminée ; et
amorcer (1208) un processus de redémarrage à température ambiante élevée afin de décélérer et désactiver tous les compresseurs en fonctionnement avant de redémarrer un ou plusieurs des compresseurs en réponse à une détermination (1204) du fait qu'il y a un compresseur (302, 303) qui n'est pas en cours de fonctionnement et qui est capable de démarrer, et à une détermination (1206) du fait qu'une pression de décharge sur un quelconque compresseur (302, 303) de la pluralité de compresseurs (302, 303) est supérieure à une pression de décharge prédéterminée, et à une détermination du fait que la température d'air ambiant est supérieure à une température ambiante prédéterminée, le ou les compresseurs à redémarrer parmi les compresseurs (302, 303) étant démarrés et utilisés à une fréquence correspondant à la fréquence de démarrage à température ambiante élevée, qui est la fréquence de fonctionnement de l'entraînement à vitesse variable immédiatement avant le redémarrage à température ambiante élevée, multipliée par le nombre précédent de compresseurs activés, et divisée par le nombre de compresseurs en cours de démarrage.

2. Procédé selon la revendication 1, dans lequel la seconde température prédéterminée est supérieure ou égale à environ 35 °C (95 °F) et la température de décalage prédéterminée est comprise entre environ 0,55 °C (1 °F) et environ 5,55 °C (10 °F).

3. Procédé selon la revendication 1, comprenant en outre l'étape consistant à arrêter le programme de régulation de capacité à température d'air ambiant élevée et reprendre le fonctionnement avec le programme de régulation de capacité en réponse au fait que la température d'air ambiant est inférieure à la seconde température prédéterminée moins un décalage prédéterminé.

4. Procédé selon la revendication 1, dans lequel l'étape d'exécution d'un processus de démarrage de système consiste à :
déterminer si une température de liquide refroidi est supérieure à une température de consigne plus une température de décalage ;
désigner la pluralité de compresseurs à démarrer en réponse à une détermination du fait que la température de liquide refroidi est supérieure à une température de consigne plus une température de décalage ;
déterminer si chaque compresseur (302, 303) de la pluralité de compresseurs (302, 303) est capable de démarrer ; et
démarrer chaque compresseur (302, 303) de la pluralité de compresseurs (302, 303) déterminé comme étant capable de démarrer.

5. Procédé selon la revendication 4, dans lequel l'étape de démarrage de chaque compresseur (302, 303) de la pluralité de compresseurs (302, 303) consiste à faire fonctionner un inverseur (206) de la pluralité d'inverseurs (206) pour le compresseur (302, 303) correspondant à une fréquence prédéterminée.

6. Procédé selon la revendication 5, dans lequel la fréquence prédéterminée dépend de la température d'air ambiant.

7. Procédé selon la revendication 1, dans lequel l'étape d'exécution d'un processus de chargement de système consiste à :
démarrer tous les compresseurs (302, 303) qui ne sont pas en cours de fonctionnement et qui sont capables de démarrer en réponse à une détermination du fait qu'une pression de décharge sur un quelconque compresseur (302, 303) de la pluralité de compresseurs (302, 303) est inférieure à une pression de décharge prédéterminée, ou à une détermination du fait que la température d'air ambiant est inférieure à une température ambiante prédéterminée ; et
faire fonctionner la pluralité d'inverseurs (206) pour les compresseurs (302, 303) correspondants à une fréquence prédéterminée.

8. Procédé selon la revendication 7, dans lequel la fréquence prédéterminée est la fréquence de fonctionnement de la pluralité d'inverseurs (206) multipliée par un rapport d'un nombre de compresseurs auparavant en fonctionnement (302, 303) divisé par un nombre de compresseurs (302, 303) à faire fonctionner.

9. Système refroidisseur de liquide à multiples compresseurs (300), comprenant :
une pluralité de compresseurs (302, 303), chaque compresseur (302, 303) de la pluralité de compresseurs (302, 303) étant entraîné par un moteur (106) correspondant, la pluralité de compresseurs (302, 303) étant intégrée dans au moins un circuit de fluide frigorigène comprenant au moins un compresseur (302, 303) de la pluralité de compresseurs (302, 303), un agencement de condenseurs (308) et un agencement d'évaporateurs (310) connectés dans une boucle fermée de fluide frigorigène ;
un entraînement à vitesse variable (104) pour alimenter les moteurs (106) correspondants de la pluralité de compresseurs (302, 303), l'entraînement à vitesse variable (104) comprenant un étage convertisseur (202), un étage de liaison CC (204) et un étage inverseur, l'étage inverseur comprenant une pluralité d'inverseurs (206) connectés chacun en parallèle à l'étage de liaison CC (204) et alimentant chacun un moteur (106) correspondant de la pluralité de compresseurs (302, 303) ;
un panneau de commande (110) pour réguler l'entraînement à vitesse variable (104) afin de générer une capacité de système présélectionnée à partir de la pluralité de compresseurs (302, 303),
le système refroidisseur de liquide à multiples compresseurs (300) étant **caractérisé en ce que**
le panneau de commande (110) est conçu pour réguler l'entraînement à vitesse variable (104) au moyen d'un programme de régulation de capacité en réponse au fait qu'une température d'air ambiant est inférieure à une première température prédéterminée, et pour réguler l'entraînement à vitesse variable (104) au moyen d'un programme de régulation de capacité à température d'air ambiant élevée en réponse au fait que la température d'air ambiant est supérieure à une seconde température prédéterminée, la seconde température prédéterminée étant supérieure à la première température prédéterminée d'une température de décalage prédéterminée, le programme de régulation de capacité à température d'air ambiant élevée étant conçu pour fournir une régulation améliorée du système refroidisseur de liquide (300) dans des conditions de température d'air ambiant élevée ;
un moyen permettant de surveiller au moins une condition de fonctionnement du système refroidisseur de liquide (300) ; et
le programme de régulation de capacité à température d'air ambiant élevée comprenant :
un moyen permettant de déterminer des réglages de capacité dans la pluralité de compresseurs (302, 303) sur la base de l'au moins une condition de fonctionnement surveillée ;
un processus de démarrage de système (404) pour démarrer la pluralité de compresseurs (302, 303),
le processus de démarrage de système étant exécuté en réponse à une détermination de fournir une capacité de sortie ;
un processus de chargement de système (406) pour augmenter la capacité de sortie de la pluralité de compresseurs (302, 303), le processus de chargement de système étant exécuté en réponse à une détermination d'augmenter la capacité de sortie ; et
un processus de déchargement de système (408) pour diminuer la capacité de sortie de la pluralité de compresseurs (302, 303), le processus de déchargement de système étant exécuté en réponse à une détermination de diminuer la capacité de sortie ;
le processus de chargement de système consistant à :
déterminer (1104) si une fréquence de fonctionnement de la pluralité d'inverseurs (206) est inférieure à une fréquence d'inverseur maximale ;
augmenter (1114) la fréquence de fonctionnement de la pluralité d'inverseurs (206) d'une amplitude de fréquence prédéterminée en réponse à une détermination du fait que la fréquence de fonctionnement de la pluralité d'inverseurs (206) est inférieure à une fréquence d'inverseur maximale ;
déterminer (1204) si parmi la pluralité de compresseurs (302, 303) un compresseur quelconque qui n'est pas en cours de fonctionnement est capable de démarrer ; et exécuter l'étape (1104) de détermination si une fréquence de fonctionnement de la pluralité d'inverseurs (206) est inférieure à une fréquence d'inverseur maximale en réponse à une détermination du fait qu'il n'y a aucun compresseur (302, 303) qui n'est pas en cours de fonctionnement qui est capable de démarrer ; et
amorcer (1208) un processus de redémarrage à température ambiante élevée afin de décélérer et désactiver tous les compresseurs en fonctionnement avant de redémarrer un ou plusieurs compresseurs de la pluralité de compresseurs (302, 303), le processus de redémarrage à température ambiante élevée étant exécuté en réponse à une détermination du fait qu'il y a un compresseur (302, 303) qui n'est pas en cours de fonctionnement et qui est capable de démarrer, et à une détermination du fait qu'une pression de décharge sur un quelconque compresseur (302, 303) de la pluralité de compresseurs (302, 303) est supérieure à une pression de décharge prédéterminée, et à une détermination du fait que la température d'air ambiant est supérieure à une température ambiante prédéterminée, le ou les compresseurs à redémarrer parmi la pluralité de compresseurs (302, 303) étant démarrés et utilisés à une fréquence correspondant à la fréquence de démarrage à température ambiante élevée, qui est la fréquence de fonctionnement de l'entraînement à vitesse variable immédiatement avant le redémarrage à température ambiante élevée, multipliée par le nombre précédent de compresseurs activés, et divisée par le nombre de compresseurs en cours de démarrage.

10. Système refroidisseur à multiples compresseurs selon la revendication 9, dans lequel la seconde température prédéterminée est supérieure ou égale à environ 35 °C (95 °F) et la température de décalage prédéterminée est comprise entre environ 0,55 °C (1 °F) et environ 5,55 °C (10 °F).
